# EUROPEAN PATENT APPLICATION

(11) **EP 3 293 683 A1**
(43) Date of publication of application: **14.03.2018**
(21) Application number: 17189977.6
(22) Date of filing: 07.09.2017
(51) Int. Cl.: G06N 99/00, G05B 13/04, G05B 17/02

(54) **METHOD AND SYSTEM FOR TRAINING A MACHINE LEARNING ALGORITHM FOR SELECTING PROCESS PARAMETERS FOR AN INDUSTRIAL PROCESS**

(30) Priority: 09.09.2016 RU 2016136413; 11.07.2017 US 201715646137
(71) Applicant: Yandex Europe AG, 6005 Luzern (CH)
(72) Inventor: LOBACHEV, Viktor Anatolievich, 115404 Moscow (RU); NEKLIUDOV, Kirill Olegovich, Volokolamskij r-n, s. Bolychevo (RU); YASHKOV, Daniil Dmitrievich, 109518 Moscow (RU); SHATERNIKOV, Aleksei Nikolaevich, 192288 St. Petersburg (RU)
(74) Representative: TLIP Limited

(57) **Abstract**

A method of training a Machine Learning Algorithm for selecting process parameters for an industrial process, the method comprising: generating a training set for training the MLA, the training set comprising a plurality of feature vectors and respectively associated estimation errors, the generating comprises: generating the plurality of feature vectors based on history data associated with an industrial process; identifying a respective value of a target process feature within each feature vector; computing a regression function; determining an estimated outcome value for each respective value of the target process feature based on the regression function; and computing the estimation error for each feature vector based on the respectively associated outcome value and the respectively associated estimated outcome value. The method also comprises training the MLA based on the training set for predicting the respective estimation error for each feature vector, the training the MLA comprises inputting each feature vector and the respectively associated estimation error into the MLA.

## Description

### TECHNICAL FIELD

The present technology relates to methods and systems for selecting process parameters for an industrial process, specifically although not exclusively by training a machine learning algorithm.

### BACKGROUND

Many industries, such as chemical, petroleum, power, food, textile, paper, and metallurgy, use industrial processes in order to process or transform gases, liquids, and/or solids for producing manufactured goods and materials, that can then be used for other industrial processes. Electronic and mechanical equipment generally measures, indicates, and controls flow, pressure, temperature, level, and composition of these various gases, liquids, and/or solids. Therefore, depending on the nature of a given industrial process, a plethora of process parameters may be measured in order to control, study and ameliorate the performance of the given industrial process in question.

For example, an industrial control system may be implemented in order to monitor an industrial process and make changes or adjustments to maintain performance within certain acceptable conditions or limits. Measurement and control of process parameters related to these gases, liquids, and/or solids range from indication and/or regulation of a single process parameter to the optimization of hundreds of process parameters attributed to the entire industrial process.

However, in most cases, the industrial process may depend on many parameters that are unknown to or unidentifiable by the industrial control system. For example, some of these parameters may be unknown since appropriate measurement equipment is not installed in the plant where the industrial process takes place. In another example, some of these parameters are not controllable such as the exact composition of raw additives inputted in the industrial process. In yet another example, some of these parameters may be affected by human intervention which may have a great impact on the industrial process and, consequently, on the final output thereof.

A continuing trend of process manufacturing is to provide maximum profit per unit time of process operation. In some situations, this emphasis demands an improved control over the consistency of the final output which may be difficult to achieve while taking into account all the uncontrollable features which are inherent to industrial processes.

### SUMMARY

It is an object of the present technology to ameliorate at least some of the inconveniences present in the prior art.

Embodiments of the present technology have been developed based on inventors' appreciation of the need to reduce the amount of inputs for a given industrial process in order to reduce a cost per unit time of process operation while controlling the output quality of the given industrial process. Without wishing to be bound to any specific theory, the present technology, in at least some embodiments thereof, may allow selecting process parameters in a way that affects the predictability of outcome results of the industrial process via a trained Machine Learning Algorithm. In at least some embodiments, the present technology may allow predicting the outcome results of the industrial process by correcting errors associated with at least some uncontrollable features of the industrial process.

In some embodiments of the present technology, there is provided a method for training a Machine Learning Algorithm (MLA) for selecting process parameters for an industrial process. The method is executable at a server which implements the MLA. The method comprises generating, by the server, a training set for training the MLA where the training set comprises a plurality of feature vectors and respectively associated estimation errors. In order to generate the training set, the method comprises generating, by the server, the plurality of feature vectors based on history data associated with the industrial process where each feature vector is representative of a plurality of identified process features of the industrial process in the history data. In order to generate the training set, the method also comprises retrieving, by the server, a plurality of outcome values from the history data where each outcome value in the plurality of outcome values is representative of a respective past result of the industrial process and is respectively associated with each feature vector in the plurality of feature vectors. In order to generate the training set, the method also comprises identifying, by the server, a respective value of a target process feature in each feature vector where the target process feature has been predetermined, such as by an operator. In order to generate the training set, the method also comprises computing, by the server, a regression function which is representative of a relationship between each value of the target process feature and the respective outcome value. In order to generate the training set, the method also comprises determining, by the server, an estimated outcome value for each respective value of the target process feature based on the regression function. In order to generate the training set, the method also comprises computing, by the server, the estimation error for each feature vector based on the respectively associated outcome value and the respectively associated estimated outcome value. The method also comprises training, by the server, the MLA based on the training set for predicting the respective estimation error for each feature vector. The training the MLA comprises inputting, by the server, each feature vector and the respectively associated estimation error into the MLA.

In some embodiments of the method, given identified process features are determined by the server based on measured parameters during a given iteration of the industrial process. Identified process features may refer to any process features that the server may determine based on information in the history data. Indeed, the history data may comprise measured parameters attributed to process features of a given iteration of the industrial process that were recorded during the given iteration of the industrial process.

In some embodiments of the method, unidentified process features, unlike the identified process features, refer to all process features of a given iteration of the industrial process that cannot be determined from the history data by the server. Unidentified process features may refer to process features that are not measured, that are not measurable or other unknown process features that could potentially affect the industrial process. Indeed, unidentified process features may not be determined by the server from the recorded information in the history data associated with the given iteration of the industrial process since parameters attributed to such features were not recorded.

In some embodiments of the method, a given outcome value is associated with any property (sometimes referred to as "type" of a given outcome value) of a past result, such as product, yielded by a given iteration of the industrial process (e.g., a given property of a steel alloy yield by a steel alloying process). A given property of the product associated with the given outcome value may be a predetermined value. In one embodiment, the given property of the product may have been determined, such as by an operator, and the given outcome value associated therewith may be retrieved by the server from the history data.

In some embodiments of the method, a given target process feature is predetermined. The given process feature may be predetermined based on a likeliness thereof to affect a given outcome value of the industrial process. The given process feature may be a given identified feature that is most likely to affect the given outcome value of the industrial process. In one embodiment, the given target process feature may be predetermined based on a type of the given outcome value.

In some embodiments of the method, the method further comprises storing, by the server, the regression function in a storage such as a database.

In some embodiments of the method, the server inputs a given value of the target process feature into a given regression function which may output in return a respective estimated outcome value.

In some embodiments, computing a given estimation error based on a respective outcome value and a respective estimated outcome value includes computing the given estimation error based on a difference between the respective outcome value and the respective estimated outcome value.

In some embodiments of the method, the method further comprises, after the training of the MLA, acquiring, by the server, the regression function from the storage. The method may further comprise acquiring, by the server, current values of a set of process features and a current outcome value which is representative of a desired result of the industrial process and the set of process features is representative of the plurality of identified process features of the industrial process except the target process feature. The method may further comprise determining, by the server, a first trial estimated outcome value for a first trial value of the target process feature based on the regression function. The method may further comprise determining, by the server, a first trial estimation error from the trained MLA for the current values of the set of process features and the first trial value of the target process feature by inputting, by the server, the current values of the set of process features and the first trial value of the target process feature into the trained MLA. The method may further comprise computing, by the server, a first trial corrected estimated outcome value based on the first trial estimated outcome value and the first trial estimation error. The method may further comprise determining, by the server, a second trial estimated outcome value for a second trial value of the target process feature based on the regression function. The method may further comprise determining, by the server, a second trial estimation error from the trained MLA for the current values of the set of process features and the second trial value of the target process feature by inputting, by the server, the current values of the current set of process features and the second trial value of the target process feature into the trained MLA. The method may further comprise computing, by the server, a second trial corrected estimated outcome value based on the second trial estimated outcome value and the second trial estimation error. The method may further comprise selecting, by the server, a given one of the first trial value of the target process feature and the second trial value of the target process feature as the current value of the target process feature based on a difference between the current outcome value and the first trial corrected estimated outcome value and a difference between the current outcome value and the second trial corrected estimated outcome value.

In some embodiments of the method, a type of a given current outcome value of a current interaction of the industrial process is identical to a type of given outcome values of past iterations of the industrial process based on which a given regression function has been computed for training the given MLA.

In some embodiments of the method, the method further comprises causing execution of the industrial process with the current values of the set of process features and the current value of the target process feature in order to acquire the current outcome value.

In some embodiments of the method, the method further comprises controlling execution of the industrial process with current values of a given set of process features and a current value of the target process feature by using the MLA in an in-use mode in order to yield a given product of the industrial process associated with a given current outcome value.

In some embodiments of the method, the method further comprises determining, by the server, the first trial value and the second trial value based on the history data.

In some embodiments of the method, a given trial value of the target process feature is predetermined. In one embodiment, the given trial value may be predetermined based on the history data. In another embodiment, the given trial value may be predetermined, such as by the operator. It is contemplated that the given trial value may be predetermined by the server.

In some embodiments of the method, the server corrects a given trial estimated outcome value by using a respective trial estimation error. The server may add a given trial estimated outcome value with a respective trial estimation error in order to compute a given trial corrected estimated outcome value.

In some embodiments of the method, selection of a given trial value as a given current value of the target process feature is based on the history data. The server may select a given trial value as a given outcome value at least partially based on given outcome values and given values of the target process feature of past iterations of the industrial process recorded in the history data.

In some embodiments of the method, the server determines a given historical distribution of past outcome values for a given trial feature vector based on the history data.

In some embodiments of the method, the regression function is one of: linear regression; a broken linear regression; a logistic regression; a polynomial regression; a ridge regression; and a lasso regression.

In some embodiments of the method, the method comprises identifying, by the server, a respective value of a first target process feature and of a second target process feature in each feature vector where the first target process feature and the second target process feature has been predetermined, such as by an operator. The method may also comprise computing, by the server, a planar regression function which is representative of a relationship between each value of the first target process feature, a respective value of the second target process feature and the respective outcome value. The method may also comprise determining, by the server, an estimated outcome value for each respective value of the first target process feature and a respective value of the second target process feature based on the planar regression function. The method may also comprise computing, by the server, the estimation error for each feature vector based on the respectively associated outcome value and the respectively associated estimated outcome value. The method may also comprise training, by the server, the MLA based on the training set for predicting the respective estimation error for each feature vector. The training the MLA may comprise inputting, by the server, each feature vector and the respectively associated estimation error into the MLA.

In some embodiments of the method, the method further comprises, after training the MLA, acquiring, by the server, the planar regression function from the storage. The method may further comprise acquiring, by the server, current values of a set of process features and a current outcome value that is representative of a desired result of the industrial process, the set of process features is representative of the plurality of identified process features of the industrial process except the first target process feature and the second target process future. The method may further comprise determining, by the server, a first trial estimated outcome value for a first trial value of the first target process feature and for a first value of the second target process feature based on the planar regression function. The method may further comprise determining, by the server, a first trial estimation error from the trained MLA for the current values of the set of process features, the first trial value of the first target process feature and the first trial value of the second target process feature by inputting, by the server, the current values of the set of process features, the first trial value of the first target process feature and the first value of the second target process feature into the trained MLA. The method may further comprise computing, by the server, a first trial corrected estimated outcome value based on the first trial estimated outcome value and the first trial estimation error. The method may further comprise determining, by the server, a second trial estimated outcome value for a second trial value of the first target process feature and for a second trial value of the second target process feature based on the planar regression function. The method may further comprise determining, by the server, a second trial estimation error from the trained MLA for the current values of the set of process features, the second trial value of the first target process feature and the second trial value of the second target process feature by inputting, by the server, the current values of the current set of process features, the second trial value of the first target process feature and the second value of the second target process feature into the trained MLA. The method may further comprise computing, by the server, a second trial corrected estimated outcome value based on the second trial estimated outcome value and the second trial estimation error. The method may further comprise selecting, by the server, the first trial values or the second trial values as the current pair of values for the first target process feature and the second target process feature, respectively, based on a difference between the current outcome value and the first trial corrected estimated outcome value and a difference between the current outcome value and the second trial corrected estimated outcome value.

In some embodiments of the method, the method further comprises causing execution of the industrial process with the current values of the set of process features and the current pair of values for the first target process feature and the second target process feature, respectively, in order to acquire the current outcome value.

In some embodiments of the method, the method further comprises determining, by the server, the pair of the first trial values and the pair of the second trial values based on the history data.

In some embodiments of the method, the method further comprises using the trained MLA to select process parameters for an industrial process. In some embodiments of the method, the industrial process is a steel alloying process. The industrial process may be any other material processing process.

In some embodiments of the present technology, there is provided a server for training a Machine Learning Algorithm (MLA) for selecting process parameters for an industrial process, where the server implements the MLA. The server is configured to generate a training set for training the MLA where the training set comprising a plurality of feature vectors and respectively associated estimation errors. In order to generate the training set, the server is configured to generate the plurality of feature vectors based on history data associated with an industrial process where each feature vector is representative of a plurality of identified process features of the industrial process in the history data. In order to generate the training set, the server is configured to retrieve a plurality of outcome values from the history data where each outcome value in the plurality of outcome values is representative of a respective past result of the industrial process and is respectively associated with each feature vector in the plurality of feature vectors. In order to generate the training set, the server is configured to identify a respective value of a target process feature in each feature vector where the target process feature has been predetermined, such as by an operator. In order to generate the training set, the server is configured to compute a regression function that is representative of a relationship between each value of the target process feature and the respective outcome value. In order to generate the training set, the server is configured to determine an estimated outcome value for each respective value of the target process feature based on the regression function. In order to generate the training set, the server is configured to compute the estimation error for each feature vector based on the respectively associated outcome value and the respectively associated estimated outcome value. The server is also configured to train the MLA based on the training set for predicting the respective estimation error for each feature vector. In order to train the MLA, the server is configured to input each feature vector and the respectively associated estimation error into the MLA.

In some embodiments of the server, the server is further configured to store the regression function in a storage such as a database.

In some embodiments of the server, the server is further configured, after generating the training set, to acquire the regression function from the storage. The server may be further configured to acquire current values of a set of process features and a current outcome value being representative of a desired result of the industrial process, the set of process features being representative of the plurality of identified process features of the industrial process except the target process feature. The server may be further configured to determine a first trial estimated outcome value for a first trial value of the target process feature based on the regression function. The server may be further configured to determine a first trial estimation error from the trained MLA for the current values of the set of process features and the first trial value of the target process feature by inputting the current values of the set of process features and the first trial value of the target process feature into the trained MLA. The server may be further configured to compute a first trial corrected estimated outcome value based on the first trial estimated outcome value and the first trial estimation error. The server may be further configured to determine a second trial estimated outcome value for a second trial value of the target process feature based on the regression function. The server may be further configured to determine a second trial estimation error from the trained MLA for the current values of the set of process features and the second trial value of the target process feature by inputting the current values of the current set of process features and the second trial value of the target process feature into the trained MLA. The server may be further configured to compute a second trial corrected estimated outcome value based on the second trial estimated outcome value and the second trial estimation error. The server may be further configured to select a given one of the first trial value of the target process feature and the second trial value of the target process feature as the current value of the target process feature based on a difference between the current outcome value and the first trial corrected estimated outcome value and a difference between the current outcome value and the second trial corrected estimated outcome value.

In some embodiments of the server, the server is further configured to cause execution of the industrial process with the current values of the set of process features and the current value of the target process feature in order to acquire the current outcome value.

In some embodiments of the server, the server is further configured to determine the first trial value and the second trial value based on the history data.

In some embodiments of the server, the regression function is one of: linear regression; a broken linear regression; a logistic regression; a polynomial regression; a ridge regression; and a lasso regression.

In some embodiments of the server, the server is configured to identify a respective value of a first target process feature and of a second target process feature in each feature vector where the first target process feature and the second target process feature have been predetermined, such as by an operator. The server may be configured to compute a planar regression function being representative of a relationship between each value of the first target process feature, a respective value of the second target process feature and the respective outcome value. The server may be configured to determine an estimated outcome value for each respective value of the first target process feature and a respective value of the second target process feature based on the planar regression function. The server may be configured to compute the estimation error for each feature vector based on the respectively associated outcome value and the respectively associated estimated outcome value. The server may be configured to train the MLA based on the training set for predicting the respective estimation error for each feature vector. In order to train the MLA, the server may be configured to input each feature vector and the respectively associated estimation error into the MLA. The server may also be configured to acquire current values of a set of process features and a current outcome value being representative of a desired result of the industrial process where the set of process features is representative of the plurality of identified process features of the industrial process except the first target process feature and the second target process future. The server may be configured to determine a first trial estimated outcome value for a first trial value of the first target process feature and for a first value of the second target process feature based on the planar regression function. The server may be configured to determine a first trial estimation error from the trained MLA for the current values of the set of process features, the first trial value of the first target process feature and the first trial value of the second target process feature by inputting the current values of the set of process features, the first trial value of the first target process feature and the first value of the second target process feature into the trained MLA. The server may be configured to compute a first trial corrected estimated outcome value based on the first trial estimated outcome value and the first trial estimation error. The server may be configured to determine a second trial estimated outcome value for a second trial value of the first target process feature and for a second trial value of the second target process feature based on the planar regression function. The server may be configured to determine a second trial estimation error from the trained MLA for the current values of the set of process features, the second trial value of the first target process feature and the second trial value of the second target process feature by inputting the current values of the current set of process features, the second trial value of the first target process feature and the second value of the second target process feature into the trained MLA. The server may be configured to compute a second trial corrected estimated outcome value based on the second trial estimated outcome value and the second trial estimation error. The server may be configured to select the first trial values or the second trial values as the current pair of values for the first target process feature and the second target process feature, respectively, based on a difference between the current outcome value and the first trial corrected estimated outcome value and a difference between the current outcome value and the second trial corrected estimated outcome value.

In some embodiments of the server, the server is further configured to cause execution of the industrial process with the current values of the set of process features and the current pair of values for the first target process feature and the second target process feature, respectively, in order to acquire the current outcome value.

In some embodiments of the server, the server is further configured to determine the pair of the first trial values and the pair of the second trial values based on the history data.

In at least some embodiments of the present technology, the server is configured to automate the production of metal alloys, such as steel alloys, for example, according to the current outcome value by providing necessary information to industrial machinery serving the production of such steel alloys. This automation of the industrial process by the server may cause the execution of an industrial process with increased efficiency without sacrificing output quality. For example, by means of some embodiments of the present technology, a reduced cost per unit time of process operation is achieved with controlled output quality of the industrial process.

In the context of the present specification, unless expressly provided otherwise, a "server" is a computer program that is running on appropriate hardware and is capable of receiving requests (e.g. from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g. received instructions or requests) or any particular task will have been received, carried out, or caused to be carried out, by the same server (i.e. the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included in the expression "at least one server".

In the context of the present specification, unless expressly provided otherwise, "client device" is any computer hardware that is capable of running software appropriate to the relevant task at hand. Thus, some (non-limiting) examples of client devices include personal computers (desktops, laptops, netbooks, etc.), smartphones, and tablets. It should be noted that a device acting as a client device in the present context is not precluded from acting as a server to other client devices. The use of the expression "a client device" does not preclude multiple client devices being used in receiving/sending, carrying out or causing to be carried out any task or request, or the consequences of any task or request, or steps of any method described herein.

In the context of the present specification, unless expressly provided otherwise, a "storage" or a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, unless expressly provided otherwise, the expression "component" is meant to include software (appropriate to a particular hardware context) that is both necessary and sufficient to achieve the specific function(s) being referenced.

In the context of the present specification, unless expressly provided otherwise, the expression "computer usable information storage medium" is intended to include media of any nature and kind whatsoever, including RAM, ROM, disks (CD-ROMs, DVDs, floppy disks, hard drivers, etc.), USB keys, solid state-drives, tape drives, etc.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a file could include the file itself (i.e. its contents), or it could be a unique file descriptor identifying the file with respect to a particular file system, or some other means of directing the recipient of the indication to a network location, memory address, database table, or other location where the file may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication. Implementations of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
FIG. 1 is a diagram of a server for implementing the present technology and/or being used in conjunction with implementations of the present technology;
FIG. 2 depicts a log table being representative of history data associated with an industrial process, such as envisioned in some embodiments of the present technology and stored by the server of Figure 1 in accordance with non-limiting embodiments of the present technology;
FIG. 3 depicts a first feature vector and a first outcome value, such as envisioned in some embodiments of the present technology and as processed by the server of Figure 1 in accordance with non-limiting embodiments of the present technology;
FIG. 4 depicts a plurality of feature vectors processed by the server of Figure 1 in accordance with non-limiting embodiments of the present technology, the plurality of feature vectors including the first feature vector depicted in FIG. 3 and a plurality of outcome values including the first outcome value depicted in FIG. 3;
FIG. 5 depicts a dataset based on which the server in FIG. 1 may compute a regression function, as envisioned in some embodiments of the present technology;
FIG. 6 is a visual representation of the dataset in FIG. 5, the visual representations including a set of data points and the regression function, as calculated by the server of Figure 1 in accordance with non-limiting embodiments of the present technology;
FIG. 7 depicts a respective estimation error for each outcome value in FIG. 4 based on a respective estimated outcome value, as determined by the server of Figure 1 in accordance with non-limiting embodiments of the present technology;
FIG. 8 depicts an in-use datapacket as well as the first trial feature vector and the second trial feature vector computed during the in-use phase of the trained MLA, the trained MLA executable by the server of Figure 1 in accordance with non-limiting embodiments of the present technology;
FIG. 9 depicts a visual representation of a first trial estimated outcome value and a second trial estimated outcome value respectively associated with the first trial feature vector and the second trial feature vector depicted in FIG. 8, as determined by the server of Figure 1 in accordance with non-limiting embodiments of the present technology;
FIG. 10 depicts a visual representation of the first trial estimation error and the second trial estimation error respectively associated with the first trial feature vector and the second trial feature vector depicted in FIG. 8, as determined by the server of Figure 1 in accordance with non-limiting embodiments of the present technology;
FIG. 11 depicts a plurality of feature vectors and a plurality of outcome values in a context of an additional scenario where two target process features are predetermined by the human operator and inputted into the server of Figure 1 in accordance with non-limiting embodiments of the present technology;
FIG. 12 depicts a dataset based on which the server in FIG. 1 may compute a planar regression function in a context of an additional scenario where two target process features are predetermined by the human operator, such as envisioned in some embodiments of the present technology;
FIG. 13 is a visual representation of the dataset in FIG. 12 which comprises a set of data points and the planar regression function in a context of an additional scenario where two target process features are predetermined by the human operator, such as envisioned in some embodiments of the present technology;
FIG. 14 depicts a set of estimated outcome values computed in a context of an additional scenario where two target process features are predetermined by the human operator, such as envisioned in some embodiments of the present technology;
FIG. 15 is a scheme block representation of a method of training the machine learning algorithm, the method executable by the server of Figure 1 in accordance with non-limiting embodiments of the present technology;
FIG. 16 depicts the visual representation of the first trial corrected estimated outcome value and the second trial corrected estimated outcome value of Figure 10 with a plurality of past outcome values determined from the history data; and
FIG. 17 depicts a respective probability distribution for the first trial corrected estimated outcome value and the second trial corrected estimated outcome value of Figure 16.

### DETAILED DESCRIPTION OF THE DRAWINGS

Examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor" or a "graphics processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a general purpose processor, such as a central processing unit (CPU) or a processor dedicated to a specific purpose, such as a graphics processing unit (GPU). Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

With these fundamentals in place, we will now consider some non-limiting examples to illustrate various implementations of aspects of the present technology.

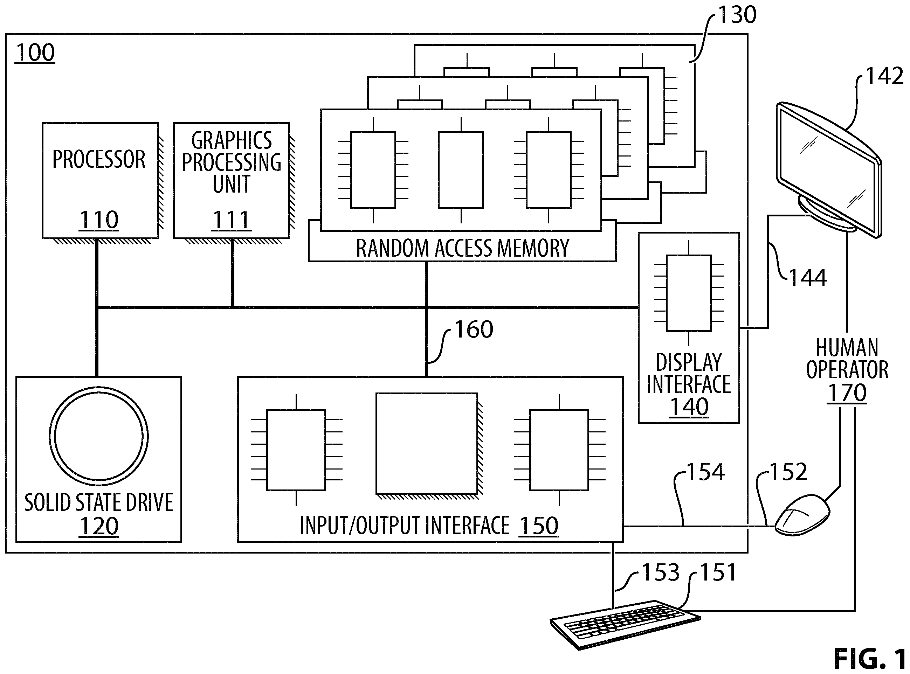

Referring to Figure 1, there is shown a server 100 suitable for use with some implementations of the present technology, the server 100 comprising various hardware components including one or more single or multi-core processors collectively represented by processor 110, a graphics processing unit (GPU) 111, a solid-state drive 120, a random access memory 130, a display interface 140, and an input/output interface 150.

Communication between the various components of the server 100 may be enabled by one or more internal and/or external buses 160 (e.g. a PCI bus, universal serial bus, IEEE 1394 "Firewire" bus, SCSI bus, Serial-ATA bus, etc.), to which the various hardware components are electronically coupled. The display interface 140 may be coupled to a monitor 142 (e.g. via an HDMI cable 144) visible to a human operator 170, and the input/output interface 150 may be coupled to a touchscreen (not shown), a keyboard 151 (e.g. via a USB cable 153) and a mouse 152 (e.g. via a USB cable 154), each of the keyboard 151 and the mouse 152 being operable by the human operator 170.

According to implementations of the present technology, the solid-state drive 120 stores program instructions suitable for being loaded into the random access memory 130 and executed by the processor 110 and/or the GPU 111 for selecting a given target process feature amongst a plurality of features and a given type of outcome values, as it will be further described below. For example, the program instructions may be part of a library or an application.

The server 100 may be a desktop computer, a laptop computer, a tablet, a smartphone, a personal digital assistant or any device that may be configured to implement the present technology, as it may be understood by a person skilled in the art.

The server 100 may be configured to implement a Machine Learning Algorithm (MLA) and to execute various methods in order to train the MLA. In some embodiments, the MLA may be one of: an artificial neural network, a Bayesian network, a support vector machine, etc. In another embodiment, the MLA may be a prediction model that consists of an ensemble of decision trees for solving *inter alia* regression and classification problems. In this case, the MLA may be trained via a machine learning technique such as gradient boosting, for example.

The server 100 may be configured to execute a plurality of procedures, where at least one of the plurality of procedures is generating a training set for training the MLA. Generally speaking, the MLA may be trained to predict estimation errors attributed to estimation techniques. How the server 100 may be configured to generate the training set for training the MLA will be described further below.

In some embodiments, the server 100 may be configured to have access to history data associated with an industrial process. The history data may be stored locally on the solid-state drive 120 of the server 100. In another embodiment, the history data may be stored remotely in a storage medium (not depicted) which is communicatively coupled to the server 100 via a network (not depicted). In such a case, the server 100 may retrieve the history data from the storage medium via the network.

Generally speaking, the history data may be associated with one of a plurality of industrial processes that involve at least one of physical, chemical, electrical and mechanical steps in order to aid manufacturing of items and/or materials. For example, the plurality of industrial processes may include one or more of: Liquefaction of gases; Smelting; Disinfection; Pyro-processing; Gilding; Electroplating; Metalizing; Electro-polishing; Shearing; Sawing; Plasma cutting; Machining; Forging; Casting; Stamping; Hydroforming; Soldering; Precipitation hardening; Moulding; Separation; Distillation; Additive manufacturing; Steel alloying; etc.

For the purpose of explanation only, following embodiments of the present technology will be provided for a steel alloying process which is a known industrial process. However, it should be understood that the present technology may be applied to any other one of the plurality of industrial processes and that the scope of the present technology is not limited to the above-mentioned list of the plurality of industrial processes.

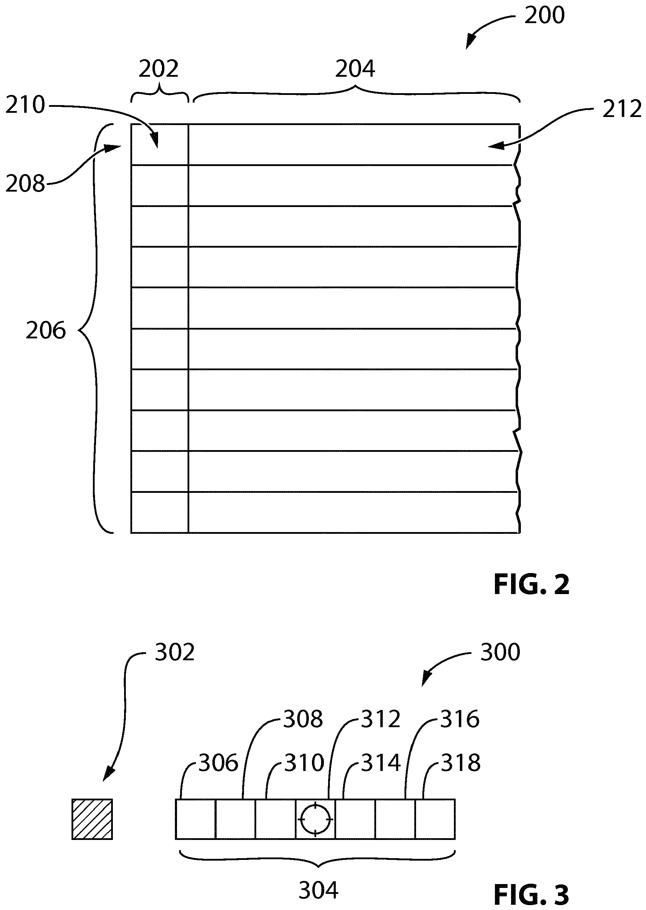

With reference to Figure 2, the history data may be stored in a form of a log table 200. In some embodiments, the log table 200 may comprise a timestamp column 202, a log data column 204 and a plurality of log rows 206. For example, a first log row 208 may comprise a first timestamp data 210 and a first log data 212. The first timestamp data 210 may be associated with a time slot when a first iteration of the steel alloying process was executed. The first log data 212 may comprise log data having been logged and stored in the log table 200 for the first iteration of the steel alloying process.

The log data having been logged for the first iteration of the steel alloying process may be attributed to a plurality of parameters that were measured during the first iteration of the steel alloying process. Examples of the plurality of parameters include but are not limited to: pressures, temperatures, time intervals, chemical compositions, masses, volumes, speeds and physical properties that were measured during the first iteration of the steel alloying process. The log data having been logged for the first iteration of the steel alloying process may also be attributed to a past outcome result of the first iteration of the steel alloying process. Examples of the past outcome result include but are not limited to: a specific chemical composition of the steel alloy, ratio of a first additive to a second additive in the steel alloy, a specific physical property of the steel alloy, etc.

As a result, each one of the log rows 206 in the plurality of log rows may be associated with a respective timestamp data and a respective log data for a respective iteration of the steel alloying process. It should be understood that, in other embodiments of the present technology, the history data may be stored in other formats that allow identifying respective log data attributed to the plurality of parameters measured during each iteration of the streel alloying process and log data attributed to past outcome results of each iteration of the steel alloying process.

In some embodiments, the server 100 may be configured to execute a vector generation procedure by using the log data in the log table 200. By executing the vector generation procedure, the server 100 may be configured to generate a given feature vector for a respective log row in the plurality of log rows 206. For example, with reference to Figure 3, the server 100 may be configured to generate a first feature vector 300. In order to generate the first feature vector 300, the server 100 may be configured to analyze the first log data 212. As a result of analyzing, the server 100 may be configured to determine a plurality of identified process features 304 based on the first log data 212 attributed to the plurality of parameters that have been measured during the first iteration of the steel alloying process.

For ease of explanation, let's assume that the server 100 analyzed the first log data 212 and determined that a measurement of 5kg of manganese scraps has been logged during the first iteration of the steel alloying process. This means that the server 100 may identify that a mass of manganese scraps is a given identified process feature and that 5kg is the given parameter (value of the given identified process feature) that has been measured and attributed to this given identified process feature.

As such and still referring to Figure 3, a first identified process feature 306, a second identified process feature 308, a third identified process feature 310, a fourth identified process feature 312, a fifth identified process feature 314, a sixth identified process feature 316 and a seventh identified process feature 318 may be respectively associated with: (i) a mass of iron cast added during the first iteration of the steel alloying process, (ii) a temperature in a converter for melting of the iron cast during the first iteration of the steel alloying process, (iii) a mass of ferroalloys added during the first iteration of the steel alloying process, (iv) a mass of manganese scraps additives added during the first iteration of the steel alloying process (i.e. a first additive where the exact composition percentage of manganese is unknown), (v) a mass of chromium scraps added during the first iteration of the steel alloying process (i.e. a second additive where the exact composition percentage of chromium is unknown), (vi) a mass of carbon scraps added during the first iteration of the steel alloying process (i.e. a third additive where the exact composition percentage of carbon is unknown), and (vii) an amount of time from the beginning of the first iteration of the steel alloying process until furnace treatment aggregates are introduced into steel during the first iteration of the steel alloying process.

As a person skilled in the art will understand, other identified process features may be determined by the server 100 based on the measured parameters during a given iteration of the steel alloying process. As a result, it should be noted that a large variety of identified process features may be determined by the server 100 and will depend on the plurality of parameters that were measured during the first iteration of the steel alloying process. It should be understood that the scope of the present technology is not limited to examples of the identified process features mentioned above.

Generally speaking, a given identified process feature refers to a feature of the industrial process that may be identified by conducting a measurement and, therefore, recording a given parameter during a given iteration of the industrial process. However, the industrial process may also be associated with a plurality of unidentified process features (also referred to herein as uncontrollable features), as opposed to the plurality of identified process features. The plurality of unidentified process features includes features that may affect the industrial process and which are not measured (i.e. by choice, or because their effect on the industrial process has not been identified) or are not measurable (for example, due to lack of appropriate measuring equipment , or because of unpredictable variability). In some embodiments of the present technology, the MLA may be trained in order to predict estimation errors that are at least partially attributed to the unidentified process features in the steel alloying process or any other industrial process.

For example, a converter that is employed to perform the given iteration of the steel alloying process may comprise sediments from previous iterations of the steel alloying process. A chemical composition or even a mass of the sediments may not be measurable, and/or predictable. Thus, a mass of such sediments can be considered to be an unidentified process feature of the steel alloying process. In another example, a mass of ferroalloys added during the steel alloying process may be measured and, therefore, may be considered to be a given identified process feature of the steel alloying process. However, a chemical composition of the ferroalloys added during the steel alloying process may be unmeasurable and, therefore, the chemical composition of the ferroalloys can be considered to be another given unidentified process feature. There may also be human and/or environmental factors that can affect the industrial process but are not accounted for because of their irregular occurrence and unknown effect on the industrial process.

In some embodiments, the server 100 may be configured to retrieve an outcome value for a respective row in the plurality of log rows 206. For instance, the server 100 may be configured to retrieve a first outcome value 302 from the first log data 212. The first outcome value 302 may be representative of a past outcome result of the industrial process, such as a result of the first iteration of steel alloying process.

In one embodiment, the first outcome value 302 may be a percentage of manganese in the steel alloy obtained via the first iteration of the steel alloying process. In another embodiment, the first outcome value 302 may be a relative ratio of iron to carbon in the steel alloy obtained via the first iteration of the steel alloying process. Therefore, a type of the past outcome result of the first iteration of steel alloying process may be a specific chemical composition of the steel alloy obtained via the first iteration of the steel alloying process

In an additional embodiment, the first outcome value 302 may be a level of hardness of the steel alloy obtained via the first iteration of the steel alloying process. In other embodiments, the first outcome value 302 may be a measure of the tensile strength of the steel alloy obtained via the first iteration of the steel alloying process. Therefore, the type of the past outcome result of the first iteration of steel alloying process may be a specific physical property of the steel alloy obtained via the first iteration of the steel alloying process

It should be noted that the first outcome value 302 may be any property of the steel alloy obtained via the first iteration of the steel alloying process where the any property is predetermined by the human operator 170 and that may be retrieved from the first log data 212. In other words, the human operator 170 may select the type of the first outcome value 302 to be retrieved by the server 100 prior to the training of the MLA by the server 100.

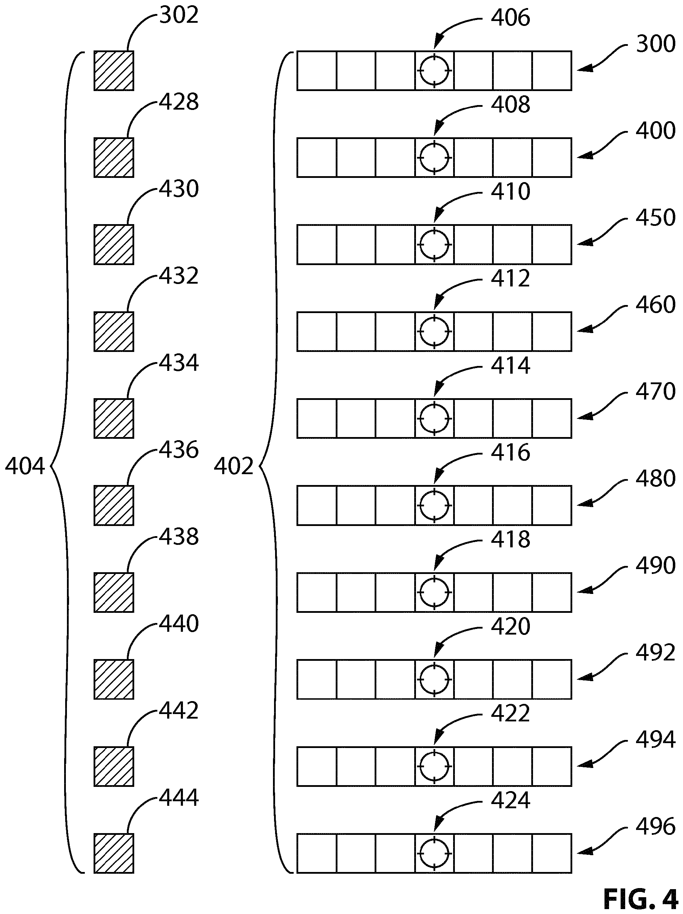

In some embodiments, the server 100 may be configured to generate a plurality of feature vectors 402 depicted in Figure 4 based on the history data similarly to how the server 100 is configured to generate the first feature vector 300. In other words, the server 100 may be configured to generate a respective feature vector for each one of the plurality of log rows 206 depicted in Figure 2. Each feature vector in the plurality of feature vectors 402 is representative of a plurality of identified process features 304 depicted in Figure 3.

This means that each feature vector is representative of identical identified process features, such as the plurality of identified features 304. However, each feature vector may have different values for a given identified process feature since each feature vector is associated with a respective iteration of the steel alloying process.

In another embodiment, the server 100 may be configured to generate a respective feature vector for a specific set of log rows (not depicted) in the plurality of log rows 206. To that end, the server 100 may selectively determine which log rows in the plurality of log rows 206 should be included in the specific set of log rows. The server 100 may be configured to determine the specific set of log rows based on respective timestamp data of each log row in the log table 200. In an additional embodiment, the server 100 may be configured to determine the specific set of log rows based on the log data associated with each log row in the log table 200. For example, the specific set of log rows may comprise a hundred of most recent log rows. In another example, the specific set of log rows may comprise three hundred log rows that are randomly picked by the server 100. This selective determination may allow the server 100 to reduce the processing load during the training of the MLA as well as the period of time required to train the MLA.

In other embodiments, the server 106 may be configured to retrieve a plurality of outcome values 404 depicted in Figure 4 from the history data similarly to how the server 100 is configured to retrieve the first outcome value 302. In other words, the server 100 may be configured to retrieve a respective outcome value for each one of the plurality of log rows 206 depicted in Figure 2. Each outcome value in the plurality of outcome values 404 is representative of a past outcome result of a respective iteration of the steel alloying process.

In summary, in one embodiment, the server 100 may be configured to generate for each one of the plurality of log rows 206 (i.e., each one of the iterations of the steel alloying process) a respective outcome value and a respective feature vector. In another embodiment, the server 100 may be configured to generate a respective outcome value and a respective feature vector for each one of the log rows in the specific set of log rows.

For the purpose of explanation only, two scenarios will now be described in order to aid the understanding of different features of the present technology. First, a scenario where the human operator 170 predetermines one target process feature amongst the plurality of identified process features 304 will be described. Then, an additional scenario where the human operator 170 predetermines two target process features, as opposed to one target process feature, will be described.

### Scenario 1: One target process feature

In some embodiments of the present technology, the human operator 170 may determine a target process feature amongst the plurality of identified process features 304. Indeed, based on the outcome value that the human operator 170 selected, the human operator 170 may determine which identified process feature is a most likely identified feature to affect the outcome result of the steel alloying process. More specifically, the target process feature may be determined by the human operator 170 in view of the type of the first outcome value 302.

For example, if the first outcome value 302 depicted in Figure 3 is the percentage of manganese in the steel alloy obtained via the first iteration of the steel alloying process, the human operator 170, based on his/her knowledge, may determine that the target process feature is the fourth identified process feature 312 which is associated with the mass of manganese scraps (the first additive). In this case, the human operator 170 may determine that the first outcome value 302 is substantially affected by the fourth identified process feature 312 of the first feature vector 300.

In another example, if the first outcome value 302 depicted in Figure 3 is the level of hardness of the steel alloy obtained via the first iteration of the steel alloying process, the human operator 170, based on his/her knowledge, may determine that the target process feature is the fifth identified process feature 314 which is associated with the mass of chromium (the second additive). In this case, the human operator 170 may determine that the first outcome value 302 is substantially affected by the fifth identified process feature 314 of the first feature vector 300.

The server 100 may be configured to identify a respective value of the target process feature in each one of the feature vectors of the plurality of feature vectors 402. More specifically, the server 100 may be configured to identify:
- a first value 406 of the target process feature in the first feature vector 300 that is associated with the first outcome value 302;
- a second value 408 of the target process feature in the second feature vector 400 that is associated with a second outcome value 428;
- a third value 410 of the target process feature in the third feature vector 450 that is associated with a third outcome value 430;
- a fourth value 412 of the target process feature in the fourth feature vector 460 that is associated with a fourth outcome value 432;
- a fifth value 414 of the target process feature in the fifth feature vector 470 that is associated with a fifth outcome value 434;
- a sixth value 416 of the target process feature in the sixth feature vector 480 that is associated with a sixth outcome value 436;
- a seventh value 418 of the target process feature in the seventh feature vector 490 that is associated with a seventh outcome value 438;
- an eighth value 420 of the target process feature in the eighth feature vector 492 that is associated with a eighth outcome value 440;
- a ninth value 422 of the target process feature in the ninth feature vector 494 that is associated with a ninth outcome value 442; and
- a tenth value 424 of the target process feature in the tenth feature vector 496 that is associated with a tenth outcome value 444.

In summary, if the history data has been recorded for ten different iterations of the steel alloying process, then the plurality of log rows 206 of the log table 200 depicted in Figure 2 may have ten log rows where each one is respectively associated with one of the ten iterations of the steel alloying process.

Also, the server 100 may be configured to generate a respective feature vector for each one of the ten different iterations of the steel alloying process. The server 100 may be configured to retrieve a respective outcome value for each one of the ten different iterations of the steel alloying process. The type of each one of the outcome values in the plurality of outcome values 404 depicted in Figure 4 may be predetermined by the human operator 170. Based on the type of the outcome values, the human operator 170 may determine the target process feature in the plurality of identified process features 304 depicted in Figure 3. The server 100 may be configured to identify a respective value of the target process feature in each one of the feature vectors in the plurality of feature vectors 402 depicted in Figure 4.

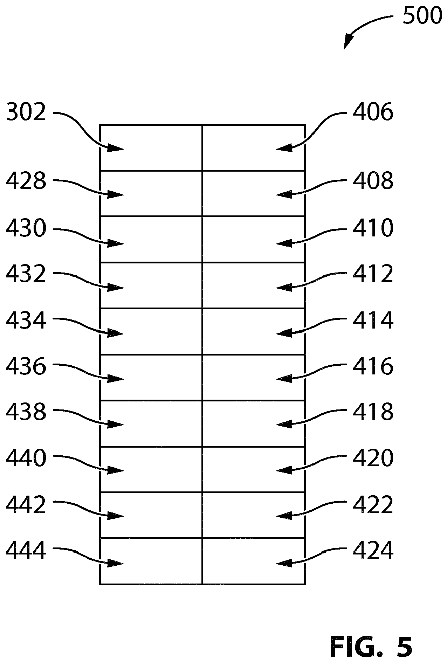

In some embodiments of the present technology, the server 100 may be configured to generate a dataset 500 depicted in Figure 5. The dataset 500 may be a table associating a respective outcome value in the plurality of outcome values 404 depicted in Figure 4 and a respective value of the target process feature associated with each given feature vector in the plurality of feature vectors 402.

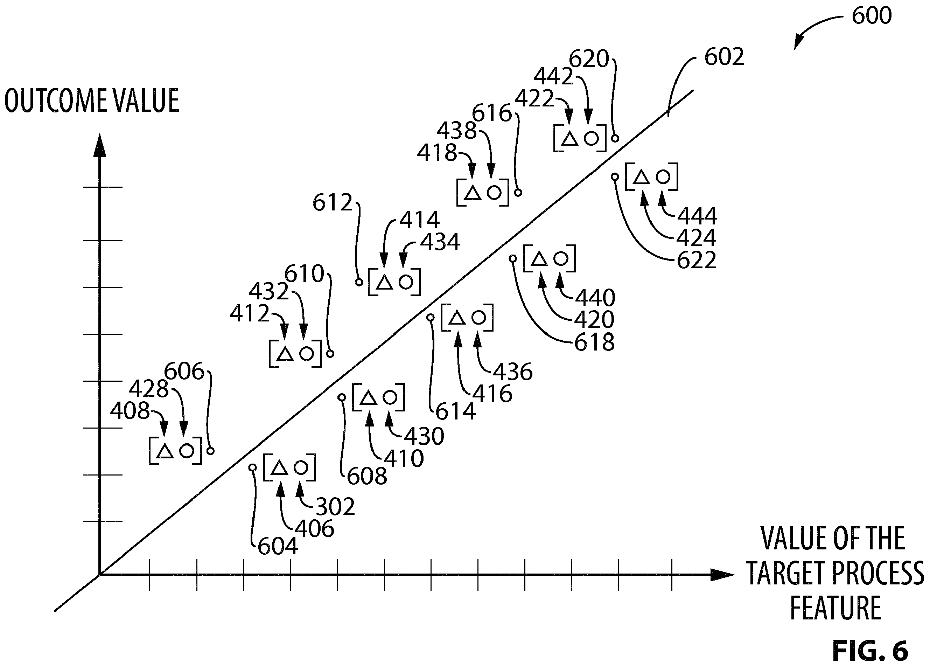

With reference to Figure 6, there is depicted a visual representation 600 of the dataset 500. The visual representation 600 comprises *inter alia* a set of data points where each data point in the set of data points is defined by coordinates corresponding to a respective value of the target process feature and a respective outcome value. For ease of understanding:
- a first data point 604 is defined by coordinates corresponding to the first value 406 of the target process feature and the first outcome value 302;
- a second data point 606 is defined by coordinates corresponding to the second value 408 of the target process feature and the second outcome value 428;
- a third data point 608 is defined by coordinates corresponding to the third value 410 of the target process feature and the third outcome value 430;
- a fourth data point 610 is defined by coordinates corresponding to the fourth value 412 of the target process feature and the fourth outcome value 432;
- a fifth data point 612 is defined by coordinates corresponding to the fifth value 414 of the target process feature and the fifth outcome value 434;
- a sixth data point 614 is defined by coordinates corresponding to the sixth value 416 of the target process feature and the sixth outcome value 436;
- a seventh data point 616 is defined by coordinates corresponding to the seventh value 418 of the target process feature and the seventh outcome value 438;
- a eighth data point 618 is defined by coordinates corresponding to the eighth value 420 of the target process feature and the eighth outcome value 440;
- a ninth data point 620 is defined by coordinates corresponding to the ninth value 422 of the target process feature and the ninth outcome value 442; and
- a tenth data point 622 is defined by coordinates corresponding to the tenth value 424 of the target process feature and the tenth outcome value 444.

Based on the set of data points, the server 100 may be configured to compute a regression function 602. In some embodiments, the server 100 may be configured to store the regression function 602 in a local storage, such as the solid-state drive 120, and/or in a remote storage. In Figure 6, the regression function 602 is a linear regression function. However, in alternative embodiments of the present technology, the regression function 602 may be one of: a broken linear regression, a logistic regression, a polynomial regression, a ridge regression, a lasso regression and other known regressions without departing from the scope of the present technology.

Generally speaking, a given regression function is representative of a relationship between an independent variable and at least one dependent variable. Based on this relationship, the given regression function may allow estimating a value of the at least one dependent variable based on a given value of the independent variable. As such, the server 100 may be configured to determine an estimated outcome value for each respective value of the target process feature based on the regression function 602.

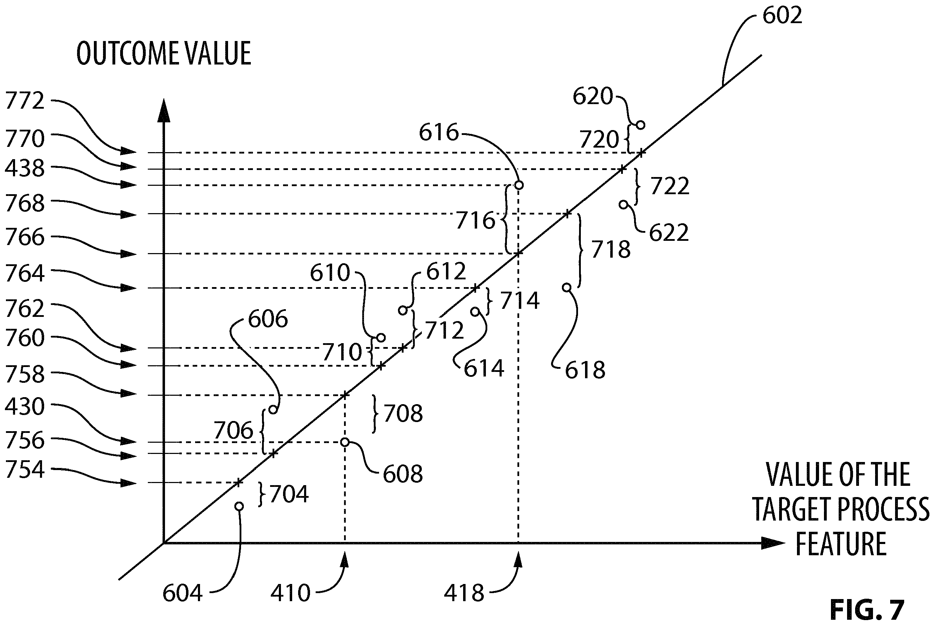

For example, the server 100 may be configured to determine a set of estimated outcome values which comprises: a first estimated outcome value 754, a second estimated outcome value 756, a third estimated outcome value 758, a fourth estimated outcome value 760, a fifth estimated outcome value 762, a sixth estimated outcome value 764, a seventh estimated outcome value 766, an eighth estimated outcome value 768, a ninth estimated outcome value 770 and a tenth estimated outcome value 772, such as depicted in Figure 7.

For example, the server 100 may be configured to determine the third estimated outcome value 758 based on the third data point 608 and the regression function 602. In other words, the server 100 may input the third value 410 of the target process feature into the regression function 602 which will output in return the third estimated outcome value 758.

In another example, the server 100 may be configured to determine the seventh estimated outcome value 766 based on the seventh data point 616 and the regression function 602. In other words, the server 100 may input the seventh value 418 of the target process feature into the regression function 602 which will output in return the seventh estimated outcome value 766.

The server 100 may be configured to determine the first estimated outcome value 754, the second estimated outcome value 756, the fourth estimated outcome value 760, the fifth estimated outcome value 762, the sixth estimated outcome value 764, the eighth estimated outcome value 768, the ninth estimated outcome value 770 and the tenth estimated outcome value 772 similarly to how the server 100 determines the third estimated outcome value 758 and the seventh estimated outcome value 766.

The server 100 may be configured to compute an estimation error for each outcome value and a respectively associated estimated outcome value. This means that the server 100 may be configured to compute a set of estimation errors, which comprises: a first estimation error 704, a second estimation error 706, a third estimation error 708, a fourth estimation error 710, a fifth estimation error 712, a sixth estimation error 714, a seventh estimation error 716, a eighth estimation error 718, a ninth estimation error 720 and a tenth estimation error 722.

For example, the server 100 may be configured to compute the third estimation error 708 based on the third data point 608 and the third estimated outcome value 758. More specifically, the server 100 may be configured to compute a difference between the third outcome value 430 (one of the coordinates of the third data point 608) and the third estimated outcome value 758 such as depicted in Figure 7. In this case, the third estimation error 708 is negative since the regression function 602 overestimated the third outcome value 430 for the third value 410 of the target process feature by outputting a third estimated outcome value 758 that is superior to the third outcome value 430.

In another example, the server 100 may be configured to compute the seventh estimation error 716 based on the seventh data point 616 and the seventh estimated outcome value 766. More specifically, the server 100 may be configured to compute a difference between the seventh outcome value 438 (one of the coordinated of the seventh data point 616) and the seventh estimated outcome value 766 such as depicted in Figure 7. In this case, the seventh estimation error 716 is positive since the regression function 602 underestimates the seventh outcome value 438 for the seventh outcome value 438 of the target process feature by outputting a seventh estimated outcome value 766 that is inferior to the seventh outcome value 438.

The server 100 may be configured to compute the first estimation error 704, the second estimation error 706, the fourth estimation error 710, the fifth estimation error 712, the sixth estimation error 714, the eighth estimation error 718, the ninth estimation error 720 and the tenth estimation error 722 similarly to how the server 100 computes the third estimation error 708 and the seventh estimation error 716.

In summary, the server 100 may be configured to compute the set of estimation errors where each estimation error in the set of estimation errors is associated to a respective estimated outcome value in the set of estimated outcome values. Each estimated outcome value in the set of estimated outcome values is associated with a respective outcome value in the plurality of outcome values 404. Each outcome value in the plurality of outcome values 404 is associated with a respective feature vector in the plurality of feature vectors 402. As such, the server 100 may be configured to associate each one of the estimation errors in the set of estimation errors to a respective feature vector in the plurality of feature vectors 402. For ease of understanding, this means that the server 100 may be configured to associate:
- the first estimation error 704 with the first feature vector 300 depicted in Figure 4;
- the second estimation error 706 with the second feature vector 400;
- the third estimation error 708 with the third feature vector 450;
- the fourth estimation error 710 with the fourth feature vector 460;
- the fifth estimation error 712 with the fifth feature vector 470;
- the sixth estimation error 714 with the sixth feature vector 480;
- the seventh estimation error 716 with the seventh feature vector 490;
- the eighth estimation error 718 with the eighth feature vector 492;
- the ninth estimation error 720 with the ninth feature vector 494; and
- the tenth estimation error 722 with the tenth feature vector 496.

The server 100 may be configured to train the MLA based on the plurality of feature vectors 402 and the set of estimation errors. In other words, the server 100 may be configured to train the MLA based on the training set which comprises each feature vector in the plurality of feature vectors 402 and the respectively associated estimation errors in the set of estimation errors. The MLA may be trained by the server 100 in order to predict a given estimated error for a given feature vector inputted therein.

For example, during a first training iteration, the MLA may be inputted with the first feature vector 300 and, consequently, may output a first assessment value. The MLA is also inputted with the first estimation error 704. The server 100 may be configured to adjust the MLA based on a difference between the first assessment value and the first estimation error in order to train the MLA to output a given assessment value for the given feature vector that is almost equal to the given estimated error. Generally speaking, after a large number of iterations, the MLA may be trained to output given assessment values that are equal or almost equal to given estimated errors of respectively associated given feature vectors.

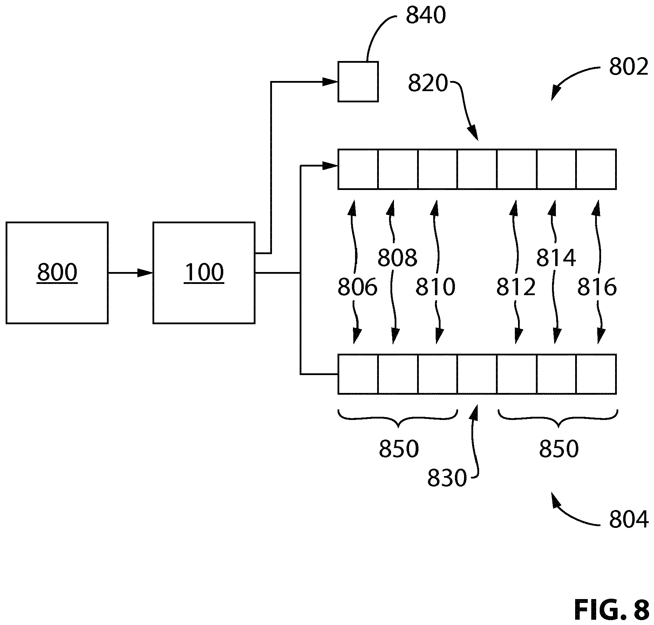

In some embodiments of the present technology, after the MLA has been trained by the server 100, the server 100 may be configured to execute an in-use mode of the MLA for predicting the given estimation error for the given feature vector inputted therein. To that end, with reference to Figure 8, the server 100 may be configured to generate at least a first trial feature vector 802 and a second trial feature vector 804 for the in-use mode of the MLA.

The server 100 may be configured to acquire an in-use datapacket 800 from a remote storage over the network. In other embodiments, the in-use datapacket 800 may be acquired from a local storage, such as the solid-state drive 120. The in-use datapacket 800 may comprise a current outcome value 840 that is representative of a desired result of the current iteration of the steel alloying process. A type of the desired result of the current iteration of the steel alloying process has to be identical to the type of the plurality of outcome values 404 predetermined by the human operator 170. For example, the desired result of the current iteration of the steel alloying process may be 0.5% of manganese in the steel alloy. The in-use datapacket 800 may also comprise data associated with parameters of the steel alloying process that ought to be used during the current iteration of the steel alloying process. Indeed, the parameters of the steel alloying process that ought to be used during the current iteration of the steel alloying process may have been selected prior to the in-use mode of the MLA by the human operator 170.

The server 100 may be configured to analyze the in-use datapacket 800 in order to acquire current values of a set of identified process features 850. In other words, the server 100 may be configured to acquire a first current value 806 of a first identified process feature of the set of identified process features 850, a second current value 808 of a second identified process feature of the set of identified process features 850, a third current value 810 of a third identified process feature of the set of identified process features 850, a fifth current value 812 of a fifth identified process feature of the set of identified process features 850, a sixth current value 814 of a sixth identified process feature of the set of identified process features 850 and a seventh current value 816 of a seventh identified process feature of the set of identified process features 850. The set of identified process features 850 is representative of the plurality of identified process features 304 depicted in Figure 3 except the target process feature.

The server 100 may be configured to determine a first trial value 820 and a second trial value 830 of the target process feature for the first trial feature vector 802 and the second trial feature vector 804, respectively. The determination of the first trial value 820 and of the second trial value 830 is done by the server 100 in order to complete the generation of the first trial feature vector 802 and of the second trial feature vector 804 for the execution of the in-use mode of the MLA.

In some embodiments, the server 100 may be configured to determine the first trial value 820 and the second trial value 830 based on the history data. For example, the server 100 may be configured to determine the first trial value 820 and the second trial value 830 as two random values that are between a highest value amongst the values of the target process feature and a lowest value amongst the values of target process feature in the history data. In other embodiments, the first trial value 820 and the second trial value 830 may be acquired by the server 100 from the human operator 170. For example, if the target process feature is the mass of manganese, the first trial value 820 may be 5kg of manganese scraps and the second trial value 830 may be 7kg of manganese scraps.

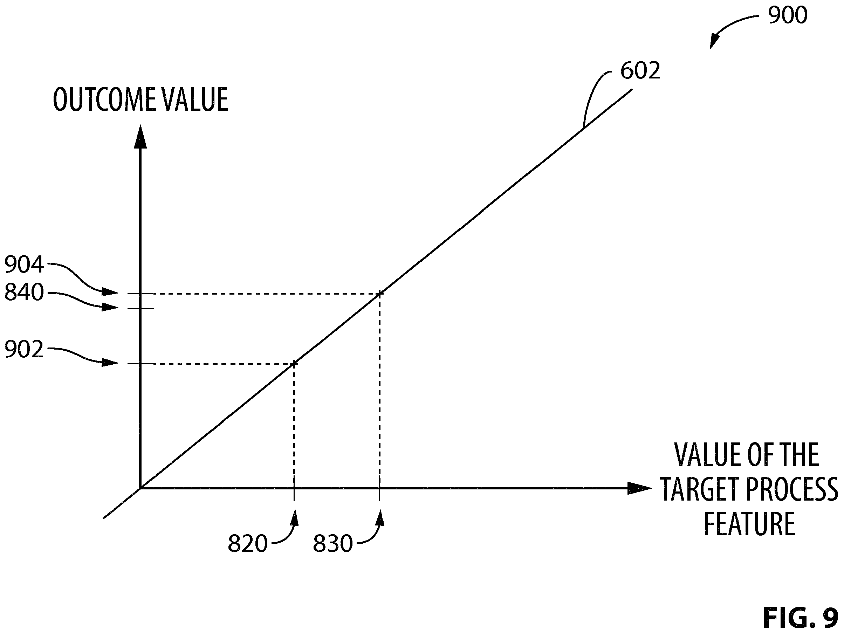

In some embodiments, the server 100 may be configured to employ the first trial value 820 and the second trial value 830 in order to determine a first trial estimated outcome value 902 and a second trial estimated outcome value 904. With reference to Figure 9, there is depicted a visual representation 900 of the first trial estimated outcome value 902 and the second trial estimated outcome value 904. To that end, the server 100 may be configured to acquire the regression function 602 from the storage. The server 100 may input the first trial value 820 of the target process feature and the second trial value 830 of the target process feature. In response, the regression function 602 may output the first trial estimated outcome value 902 and the second trial estimated outcome value 904 respectively.

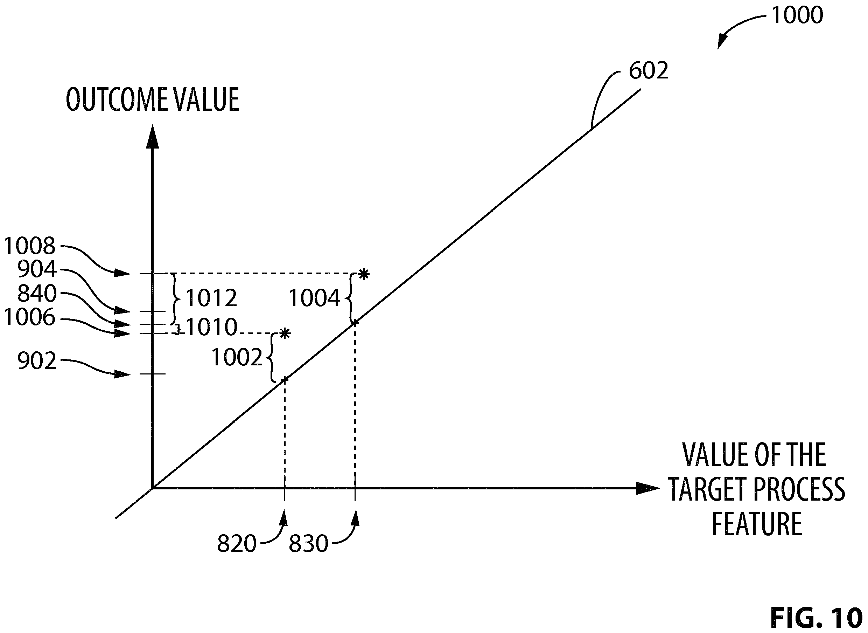

As depicted in Figure 9, the second trial estimated outcome value 904 is closer to the current outcome value 840 than the first trial estimated outcome value 902. However, as mentioned above, the regression function 602 may overestimate or underestimate a given outcome value for a given value of the target process feature. As a result, the server 100 may be configured to determine a first trial estimation error 1002 and a second trial estimation error 1004 depicted in Figure 10.

With reference to Figure 10, there is depicted a visual representation 1000 of the first trial estimation error 1002 and the second trial estimation error 1004. In order to determine the first trial estimation error 1002 and the second trial estimation error 1004, the server 100 may be configured to input respectively the first trial feature vector 802 and the second trial feature vector 804 (both depicted in Figure 8) into the trained MLA. As a result, the trained MLA may output the first trial estimation error 1002 for the first trial feature vector 802 and the second trial estimation error 1004 for the second trial feature vector 804.

The server 100 may use the first trial estimation error 1002 in order to correct the first trial estimated outcome value 902 and the second trial estimation error 1004 in order to correct the second trial estimated outcome value 904. This means that the server 100 may be configured to compute a first trial corrected estimated outcome value 1006 and a second trial corrected estimated outcome value 1008.

The server 100 may compute the first trial corrected estimated outcome value 1006 based on the first trial estimation error 1002 and the first trial estimated outcome value 902. The server 100 may compute the second trial corrected estimated outcome value 1008 based on the second trial estimation error 1004 and the second trial estimated outcome value 904. In other words, computing the first trial corrected estimated outcome value 1006 and the second trial corrected estimated outcome value 1008 allows compensating for overestimation or underestimation by the regression function 602 of a given outcome value for a given value of the target process feature.

After the server 100 computes the first trial corrected estimated outcome value 1006 and the second trial corrected estimated outcome value 1008, the server 100 may be configured to select a given one of the first trial value 820 of the target process feature and the second trial value 830 of the target process feature as the current value of the target process feature for the current iteration of the steel alloying process. The server 100 may be configured to execute the selection based on a difference 1010 between the current outcome value 840 and the first trial corrected estimated outcome value 1006 and a difference 1012 between the current outcome value 840 and the second trial corrected estimated outcome value 1008. The server 100 may compare the difference 1010 and the difference 1012 and may select one of the first trial value 820 and the second trial value 830 associated with a smallest difference amongst the difference 1010 and the difference 1012. It should be noted, that the smallest difference amongst the difference 1010 and the difference 1012 is the one that has a smallest absolute value amongst the difference 1010 and the difference 1012.

In an alternative embodiment of the present technology, the selection of one of the first and second trial values 820 and 830 as the current value of the target process feature, by the server 100, may be further based on the history data. In other words, additionally to the comparison of the differences 1010 and 1012, the server 100 may be configured to select a given one of the first and second trial values 820 and 830 as the current value of the target process feature further based on past outcome values of past iterations of the steel alloying process.

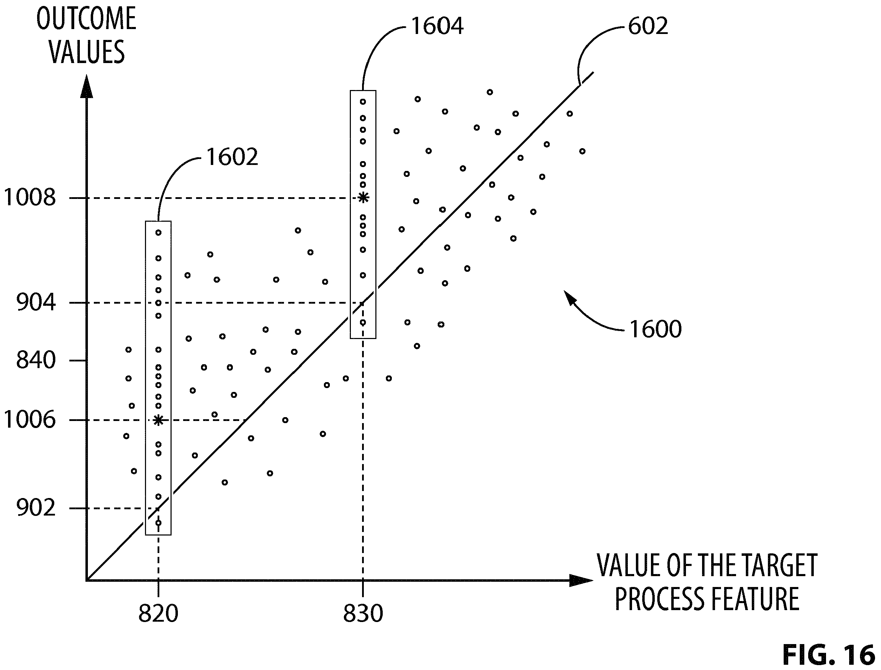

With reference to Figure 16, there is depicted a plurality of past outcome values 1600. Let it be assumed that the past outcome values of the plurality of past outcome values 1600 are respectively associated with past iterations of the steel alloying process that have been performed in association with respective past feature vectors that (i) had values of the set of identified process features 850 that are identical to the current values of the set of identified features 850 of the first and second trial feature vectors 802 and 804, (ii) but had different past values of the target process feature.

Figure 16 also depicts a first set of past outcome values 1602. The first set of past outcome values 1602 comprises past outcome values of past iterations of the steel alloying process that have been performed in association with a given past feature vector that is identical to the first trial feature vector 802. This means that, historically, the past iterations of the steel alloying process that have been performed in association with the given past feature vector that is identical to the first trial feature vector 802 resulted in different past outcome values. In other words, historically, past iterations of the steel alloying process that have been performed in association with a given value of the target process feature that is identical to the first trial value 820 resulted in different past outcome values which are within the first set of past outcome values 1602.

It is contemplated that in some embodiments of the present technology the first set of past outcomes values 1602 may comprise past outcome values of past iterations of the steel alloying process that have been performed in association with a given past value of the target process feature that is in close proximity to the first trial value 820.

Figure 16 also depicts a second set of past outcome values 1604. The second set of past outcome values 1604 comprises past outcome values of past iterations of the steel alloying process that have been performed in association with another given past feature vector that is identical to the second trial feature vector 804. This means that, historically, the past iterations of the steel alloying process that have been performed in association with the another given past feature vector that is identical to the second trial feature vector 804 resulted in different past outcome values. In other words, historically, past iterations of the steel alloying process that have been performed in association with another given value of the target process feature that is identical to the second trial value 830 resulted in different past outcome values which are within the second set of past outcome values 1604.

It is contemplated that in some embodiments of the present technology the first set of past outcomes values 1604 may comprise past outcome values of past iterations of the steel alloying process that have been performed in association with a given past value of the target process feature that is in close proximity to the first trial value 830.

In some embodiments of the present technology, if the current iteration of the steel alloying process is performed in association with the first trial feature vector 802 (i.e., the first trial value 820), a given outcome value of the current iteration of the steel alloying process may still be different from the first trial corrected estimated outcome value 1006 since, based on history data, past iterations of the steel alloying process which have been performed in association with the given past feature vector that is identical or is in close proximity to the first trial feature vector 802 (i.e., where the past value of the target process feature is in close proximity to the first trial value 820) resulted in the first set of past outcome values 1602 that includes different past outcome values amongst each other.

Similarly, if the current iteration of the steel alloying process is performed in association with the second trial feature vector 804 (i.e., the second trial value 830), a given outcome value of the current iteration of the steel alloying process may still be different from the second trial corrected estimated outcome value 1008 since, based on history data, past iterations of the steel alloying process which have been performed in association with the other given past feature vector that is identical or is in close proximity to the second trial feature vector 804 (i.e., where the past value of the target process feature is in close proximity to the second trial value 830) resulted in the second set of past outcome values 1604 that comprises different past outcome values amongst each other.

Therefore, generally speaking, it can be said that the server 100 may be configured to determine, based on the history data, a respective historical distribution of past outcome values for each one of the first trial feature vector 802 and the second trial feature vector 804. Put another way, the server 100 may be configured to determine the respective historical distribution of past outcome values for each one of the first trial feature vector 802 and the second trial feature vector 804 based on the first and second sets of past outcome values 1602 and 1604, respectively.

Alternatively, the server 100 may be configured to determine, based on the history data, a historical distribution of past outcome values for past feature vectors that are in close proximity to the first trial feature vector 802. Put another way, the server 100 may be configured to determine the historical distribution of past outcome values for past feature vectors that are in close proximity to the first trial feature vector 802 based on the first set of past outcome values 1602. Also, the server 100 may be configured to determine, based on the history data, a historical distribution of past outcome values for past feature vectors that are in close proximity to the second trial feature vector 804. Put another way, the server 100 may be configured to determine the historical distribution of past outcome values for past feature vectors that are in close proximity to the second trial feature vector 804 based on the second set of past outcome values 1604.

As a result, the server 100 may be configured to compare the first trial corrected estimated outcome value 1006 (associated with the first trial feature vector 802 and the first trial value 820) against the respective historical distribution of the first set of past outcome values 1602 associated with the first trial value 820. Similarly, the server 100 may be configured to compare the second trial corrected estimated outcome value 1008 (associated with the second trial feature vector 804 and the second trial value 830) against the respective historical distribution of the second set of past outcome values 1604 associated with the second trial value 830.

It is contemplated that in some embodiments of the present technology, comparing a given trial corrected estimated outcome value associated with a given trial value of the target process feature against the respective historical distribution of past outcome values that is associated with the same given trial value (or being in close proximity thereto) of the target process feature may allow determining the probability of obtaining a given current outcome value that is identical or is at least in close proximity to the given trial corrected estimated outcome value when performing the current iteration of the steel alloying process in association with a given trial feature vector that has the given trial value as the current value of the target process feature.

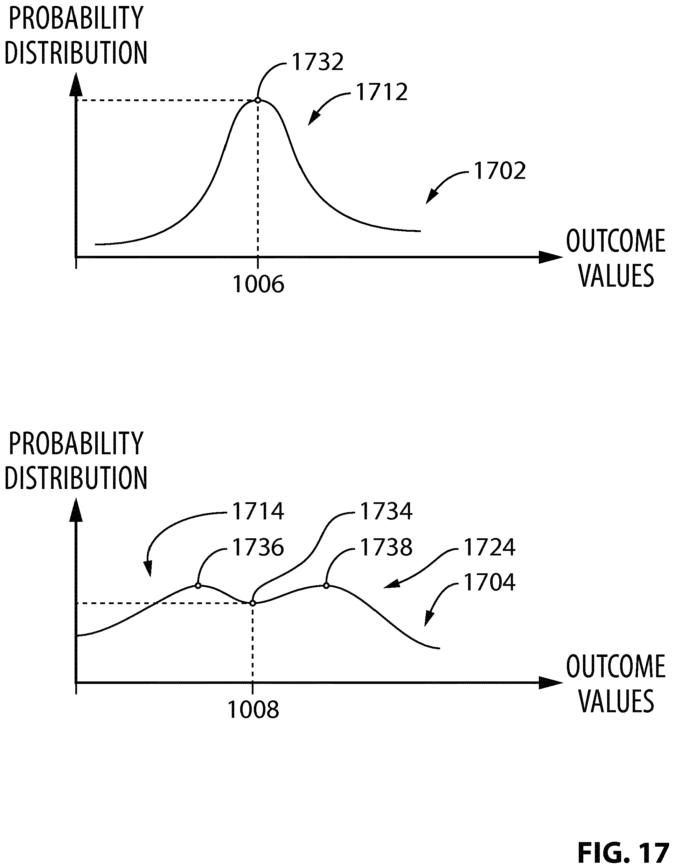

To that end, the server 100 may be configured to determine a respective probability distribution for each respective trial corrected estimated outcome value based on the respective historical distribution of past outcome values. For instance, the server 100 may be configured to determine a first probability distribution 1702, depicted in Figure 17, based on the first set of past outcome values 1602 (associated with a given past value of the target process feature that is identical or is in close proximity to the first trial value 820) for comparison against the first trial corrected estimated outcome value 1006 (associated with the first trial value 820). Similarly, the server 100 may be configured to determine a second probability distribution 1704, depicted in Figure 17, based on the second set of past outcome values 1604 (associated with a given past value of the target process feature that is identical or is in close proximity to the second trial value 830) for comparison against the second trial corrected estimated outcome value 1008 (associated with the second trial value 830).

As seen in Figure 17, the first trial corrected estimated outcome value 1006 is aligned with a probability peak 1712 of the first probability distribution 1702. More specifically, the first trial corrected estimated outcome value 1006 corresponds to a probability maximum 1732 of the first probability distribution 1702. This means that, based on history data, past iterations of the steel alloying process that have been performed in association with the given past feature vector that is identical or very similar to the first trial vector 802 resulted in past outcome values that were generally identical or at least in close proximity to the first trial corrected estimated outcome value 1006. Put another way, the past outcome values of the first set of past outcome values 1602 are generally identical or at least in close proximity to the first trial corrected estimated outcome value 1006.

Therefore, it is contemplated that if the current iteration of the steel alloying process is performed in association with the first trial feature vector 802 having the first trial value 820, according to the history data, the current iteration of the steel alloying process will most likely result in a given current outcome value that is identical or at least in close proximity to the first trial corrected estimated outcome value 1006.

On the other hand, the second probability distribution 1704 has two probability peaks 1714 and 1724 which are separated by a local probability minimum 1734. This means that, based on history data, past iterations of the steel alloying process that have been performed in association with the another given past feature vector that is identical to the second trial vector 804 resulted in past outcome values that were in proximity to outcome values corresponding to the two probability peaks 1714 and 1724.

As seen in Figure 17, the second trial corrected estimated outcome value 1008 is not aligned with any one of the two probability peaks 1714 and 1724 of the second probability distribution 1704. More specifically, the second trial corrected estimated outcome value 1008 corresponds to the local probability minimum 1734 of the second probability distribution 1704. This means that, based on history data, past iterations of the steel alloying process that have been performed in association with the another given past feature vector that is identical or very similar to the second trial vector 804 resulted in past outcome values that were not in close proximity to the second trial corrected estimated outcome value 1008.

Therefore, it is contemplated that if the current iteration of the steel alloying process is performed in association with the second trial feature vector 804 having the second trial value 830, according to the history data, the current iteration of the steel alloying process is unlikely to result in a given current outcome value that is identical or at least in close proximity to the second trial corrected estimated outcome value 1008.

In some embodiments of the present technology, the server 100 may be configured to determine, based on history data, whether the current iteration of the steel alloying process if performed in association with a given trial feature vector will result in a given current outcome value that is identical or at least in close proximity to the respective trial corrected estimated outcome value associated with that given trial feature vector. It is contemplated that in at least some embodiments, the server 100 may be configured to determine a historical probability of obtaining a given outcome value based on a given trial feature vector. In this case, the historical probability of obtaining the first trial corrected estimated outcome value 1006 as the result of the current iteration of the steel alloying process performed in association with the first trial feature vector 802 (i.e., associated with the first trial value 820) is comparatively high with respect to the historical probability of obtaining the second trial corrected estimated outcome value 1008 as the result of the current iteration of the steel alloying process performed in association with the second trial feature vector 804 (i.e., associated with the second trial value 830).

In summary, sequentially or in parallel to the determining of the smallest difference amongst the difference 1010 and the difference 1012 as depicted in Figure 10, the server 100 may be configured to determine the first probability distribution 1702 based on the first set of past outcome values 1602 (i.e., part of the history data) and the second probability distribution 1704 based on the second set of past outcome values 1604 (i.e., part of the history data). As such, the server 100 may determine whether the current iteration of the steel alloying process, if performed in association with the first trial feature vector 802, will result in the given current outcome value that is identical or at least in close proximity to the first trial corrected estimated outcome value 1006. Also as such, the server 100 may determine whether the current iteration of the steel alloying process, if performed in association with the second trial feature vector 804, will result in the given current outcome value that is identical or at least in close proximity to the second trial corrected estimated outcome value 1008.

In an alternative embodiment of the present technology, if the differences 1010 and 1012 are almost identical to each other, the server 100 may be configured to select one of the first trial value 820 and the second trial value 830 as the current value of the target process feature based on the historical probabilities of the first and second trial corrected estimated outcome values 1006 and 1008 respectively associated with the first and second trial feature vectors 802 and 804. In this example, if the differences 1010 and 1012 are almost identical to each other, the server 100 may select the first trial value 820 as the current value of the target process feature since, based on history data, past iterations of the steel alloying process which have been performed in associated with the given past feature vector that is identical to the first trial feature vector 802 resulted in past outcome values that were generally identical or at least in close proximity to the first trial corrected estimated outcome values 1006, whereas, based on history data, past iterations of the steel alloying process which have been performed in association with the another given past feature vector that is identical to the second trial feature vector 804 did not result in past outcome values that were generally identical or at least in close proximity to the second trial corrected estimated outcome values 1008.

In yet another embodiment of the present technology, the server 100 may be configured to provide information to the operator and/or a secondary server (not depicted) regarding the first probability distribution 1702 and the second probability distribution 1704.

For example, based on the first probability distribution 1702, the server 100 may provide the operator and/or the secondary server with a range of outcome values (not depicted) that corresponds to most probable outcome values for the current iteration of the steel alloying process if a given feature vector used during the current iteration is identical to the first trial feature vector 802. In this case, the most probable outcome values may correspond to outcome values that are associated with a respective probability that is within 5% of difference, for example, from the probability peak 1712. In other words, the most probable outcome values may correspond to outcome values that are in proximity to the probability peak 1712 and, therefore, are in proximity to the first trial corrected estimated outcome value 1006.

In another example, based on the second probability distribution 1704, the server 100 may provide the operator and/or the secondary server with a range of outcome values (not depicted) that corresponds to most probable outcome values for the current iteration of the steel alloying process if a given feature vector used during the current iteration is identical to the second trial feature vector 804. In this case, the most probable outcome values may correspond to outcome values that are associated with a respective probability that is within 5% of difference, for example, from the two probability peaks 1714 and 1724. In other words, the most probable outcome values may correspond to outcome values that are in proximity to the two probability peaks 1714 and 1724 and, therefore, are not in proximity to the second trial corrected estimated outcome value 1008.

In some embodiments, the current value of the target process feature may be stored locally in the solid-state drive 120. In another embodiment, the current value of the target feature may also be stored remotely in the remote storage via the network. The selection of the given one of the first trial value 820 of the target process feature and the second trial value 830 of the target process feature as the current value of the target process feature may be indicative of the end of the in-use mode of the trained MLA.

In other embodiments of the present technology, the server 100 may be configured to cause the execution of the current iteration of the steel alloying process. Indeed, the server 100 may be configured to delegate the execution of the current iteration of the steel alloying process to the secondary server in order for the secondary server to execute the current iteration of the steel alloying process with the current values of the set of process features 850 and the current value of the target process feature. It is contemplated that the server 100 and the secondary server may be a single entity, in which case, the server 100 can execute the current iteration of the steel alloying process with the current values of the set of process features 850 and the current value of the target process feature.

As a result of the execution of the current iteration of the steel alloying process with the current values of the set of process features 850 and the current value of the target process feature, in some embodiments of the present technology, the current outcome value 840 may be acquired. In other embodiments of the present technology, the execution of the current iteration of the steel alloying process with the current values of the set of process features 850 and the current value of the target process feature a certain outcome value substantially equal to the current outcome value 840 may be acquired as a result of the current iteration of the steel alloying process. In alternative embodiments, the certain outcome value may be between 95% and 105% of the current outcome value 840. In another embodiment, the certain outcome value may be at least the current outcome value. In one embodiment, the certain outcome value may be at most the current outcome value. In yet another embodiment, it may be possible to determine a range of mass of a specific additive that should be added during the current iteration of the steel alloying process in order to obtain the desired result of the current iteration of the steel alloying process.

In another embodiment of the present technology, the selection of the current value of the target process feature may depend on a specific process optimization objective. For example, if the specific process optimization objective is to minimize the mass of manganese during the current iteration of the steel alloying process, the server 100 may be configured to select a lowest current value of the target process feature to be used in the current iteration of the steel alloying process that would result in the certain outcome value that is in an acceptable range from the current outcome value 840 (for example between 95% and 105% of the current outcome value 840). As such, the server 100 may identify the lowest mass of manganese to be used during the current iteration of the steel alloying process which would result in the certain outcome value that is still in the acceptable range from the current outcome value 840. Other specific process optimization objectives can be set by the operator and executed by the server 100 such as, but not limited to: minimize the price of an additive, minimize overall iteration time of the current iteration of the steel alloying process, and the like.

### Scenario 2: Two target process features

In some embodiments of the present technology, the human operator 170 may predetermine a first target process feature and a second target process feature based on the outcome value having been predetermined by the human operator 170.

In this scenario, if the type of the given outcome values is the level of hardness of the steel alloy obtained via the given iteration of the steel alloying process, the human operator 170 may determine, based on his knowledge, that chromium and vanadium affects the level of hardness of the steel alloying process. Therefore, the human operator 170 may determine that the first target process feature is the mass of chromium scraps added during the given iteration of the steel alloying process and that the second target process feature is a mass of vanadium scraps added during the given iteration of the steel alloying process. Indeed, the human operator 170 may determine that the level of hardness of the steel alloy is substantially affected by the mass of chromium and the mass of vanadium added during the given iteration of the steel alloying process.

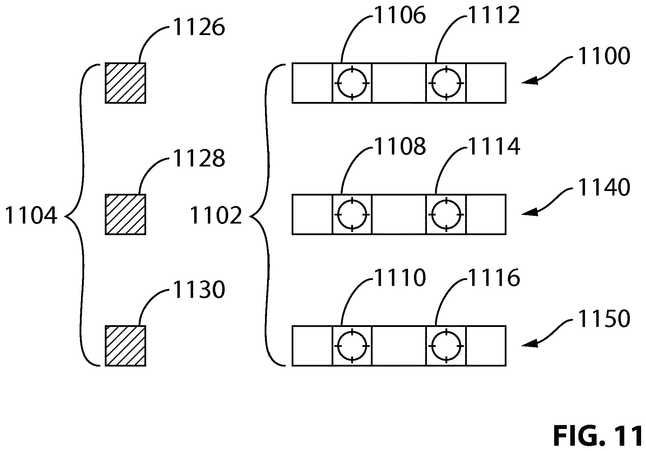

With reference to Figure 11, there is depicted a first outcome value 1126, a second outcome value 1128 and a third outcome value 1130, which together form a plurality of outcome values 1104. There is also depicted a first feature vector 1100, a second feature vector 1140 and a third feature vector which together form a plurality of feature vectors 1102. Needless to say, in this scenario, the first outcome value 1126 and the first feature vector 1100 may be associated with a first iteration of the steel alloying process, the second outcome value 1128 and the second feature vector 1140 may be associated with a second iteration of the steel alloying process and the third outcome value 1130 and the third feature vector 1150 may be associated with a third iteration of the steel alloying process. It should be noted that the plurality of feature vectors 1102 may comprise a large number of feature vectors and that only three feature vectors have been depicted in Figure 11 for ease of explanation only and that the number of feature vectors in the plurality of feature vectors 1102 is not intended to be a limiting feature of the present technology.

In this scenario, the server 100 may be configured to identify a respective value of the first target process feature and a respective value of the second target process feature in each one of the plurality of feature vectors 1102. For ease of understanding, the server 100 may be configured to identify:
- a first value 1106 of the first target process feature and a first value 1112 of the second target process feature in the first feature vector 1100 and which are associated with the first outcome value 1126;
- a second value 1108 of the first target process feature and a second value 1114 of the second target process feature in the second feature vector 1140 and which are associated with the second outcome value 1128; and
- a third value 1110 of the first target process feature and a third value 1116 of the second target process feature in the third feature vector 1150 and which are associated with the third outcome value 1130.

In summary, based on the type of the each one of the outcome values, the human operator 170 may determine the first target process feature and the second target process feature in the plurality of identified process features. The server 100 may be configured to identify a respective value of the first target process feature and a respective value of the second target process feature in each one of the feature vectors in the plurality of feature vectors 1102.

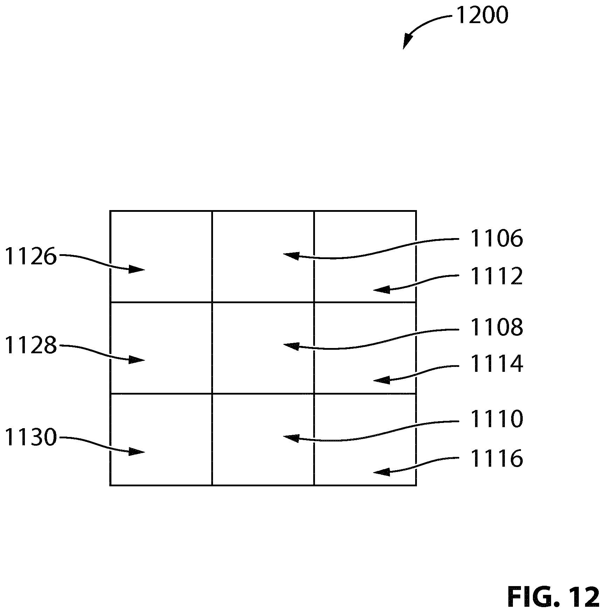

The server 100 may be configured to generate a dataset 1200 depicted in Figure 12. The dataset 1200 may be a table associating a respective outcome value in the plurality of outcome values 1104 depicted in Figure 11, a respective value of the first target process feature and a respective value of the second target process feature associated with each given feature vector in the plurality of feature vectors 1102.

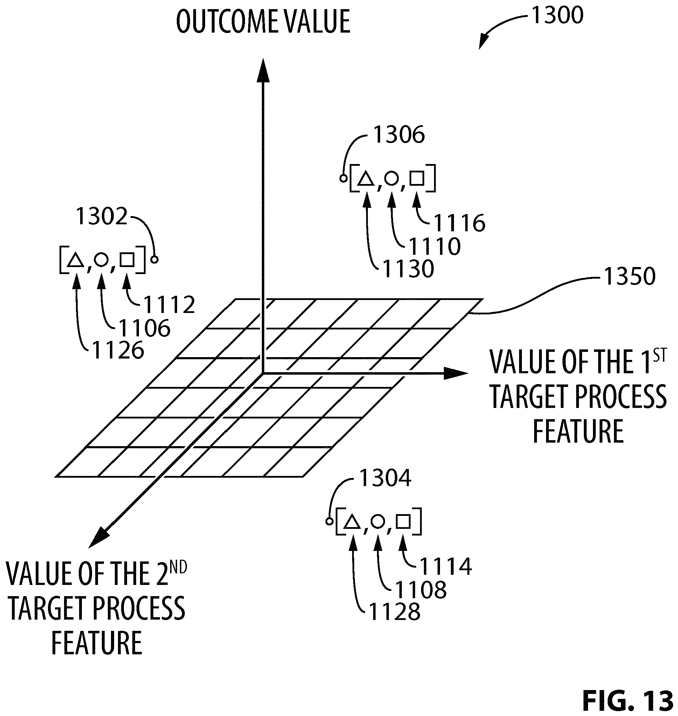

With reference to Figure 13, there is depicted a visual representation 1300 of the dataset 1200. The visual representation 1300 comprises *inter alia* a set of data points where each data point in the set of data points is defined by coordinates corresponding to a respective value of the first target process feature, a respective value of the second target process feature and a respective outcome value. For ease of understanding:
- a first data point 1302 is defined by coordinates corresponding to the first value 1106 of the first target process feature, the first value 1112 of the second target process feature and the first outcome value 1126;
- a second data point 1304 is defined by coordinates corresponding to the second value 1108 of the first target process feature, the second value 1114 of the second target process feature and the second outcome value 1128; and
- a third data point 1306 is defined by coordinates corresponding to the third value 1110 of the first target process feature, the third value 1116 of the second target process feature and the third outcome value 1130.

In this scenario, based on the set of data points, the server 100 may be configured to compute a planar regression function 1350. In some embodiments, the server 100 may be configured to store the planar regression function 1350 in a local storage, such as the solid-state drive 120, and/or in a remote storage. In Figure 6, the plane regression function 1350 is a planar function since the plane regression function 1350 is representative of a relationship between an independent variable and two dependent variables. In some embodiments, the plane regression function 1350 may be a curved planar function.

In additional embodiments, the human operator 170 may predetermine more than two target process features similarly to how the human operator 170 predetermines the first target process feature and the second target process features in this scenario. Accordingly, the server 100 may be configured to compute a multi-dimensional regression function which will be representative of a relationship between the independent variable (corresponding to various outcome values) and more than two dependent variables (each one corresponding to values of each one of more than two target process features, respectively).

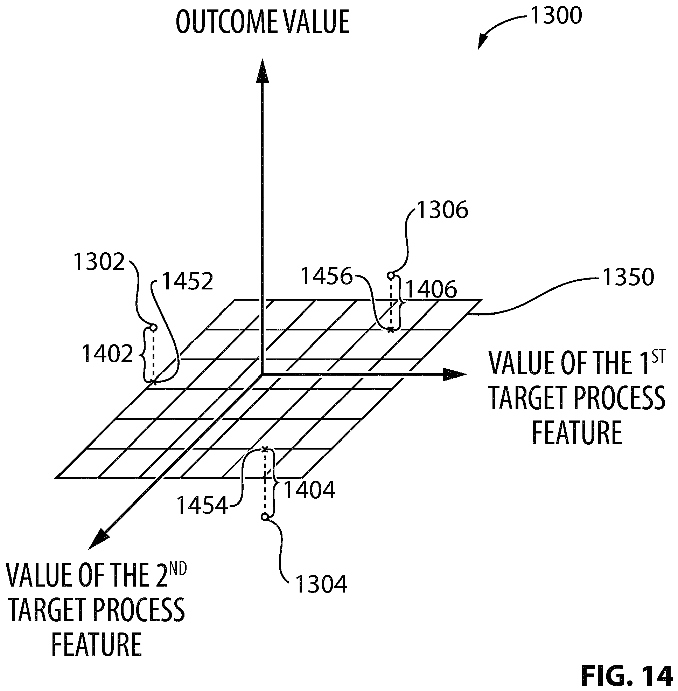

The server 100 may be configured to determine a set of estimated outcome values which comprises: a first estimated outcome value 1452, a second estimated outcome value 1454 and a third estimated outcome value 1456, such as depicted in Figure 14.

For example, the server 100 may be configured to determine the first estimated outcome value 1452 based on the first data point 1302 and the planar regression function 1350. In other words, the server 100 may input the first value 1106 of the first target process feature and the first value 1112 of the second target process feature into the planar regression function 1350 which will output in return the first estimated outcome value 1452. The server 100 may be configured to determine the second estimated outcome value 1454 and the third estimated outcome value 1456 similarly to how the server 100 may determine the first estimated outcome value 1452.

The server 100 may be configured to compute an estimation error for each outcome value and a respectively associated estimated outcome value. This means that the server 100 may be configured to compute a set of estimation errors which comprises a first estimation error 1402, a second estimation error 1404 and a third estimation error 1406.

For example, the server 100 may be configured to compute the first estimation error 1402 based on the first data point 1302 and the first estimated outcome value 1452. More specifically, the server 100 may be configured to compute the difference between the first outcome value 1126 (one of the coordinates of the first data point 1302) and the first estimated outcome value 1452. In this case, the first estimation error 1402 is positive since the regression function 602 underestimates the first outcome value 1302 for the first value 1106 of the first target process feature and for the first value 1112 of the second target process feature by outputting a first estimated outcome value 1452 which is inferior to the first outcome value 1126.

The server 100 may be configured to compute the second estimation error 1404 and the third estimation error 1406 similarly to how the server 100 may compute the first estimation error 1402.

In summary, the server 100 may be configured to compute the set of estimation errors where each estimation error in the set of estimation errors is associated to a respective estimated outcome value in the set of estimated outcome values. Each estimated outcome value in the set of estimated outcome values is associated with a respective outcome value in the plurality of outcome values 1104. Each outcome value in the plurality of outcome values 1104 is associated with a respective feature vector in the plurality of feature vectors 1102. As such, the server 100 may be configured to associate each one of the estimation errors in the set of estimation errors to a respective feature vector in the plurality of feature vectors 1102. For ease of understanding, this means that the server 100 may be configured to associate:
- the first estimation error 1402 with the first feature vector 1100 depicted in Figure 11;
- the second estimation error 1404 with the second feature vector 1140; and
- the third estimation error 1406 with the third feature vector 1150.

The server 100 may be configured to train the MLA based on the plurality of feature vectors 1102 and the set of estimation errors. In other words, the server 100 may be configured to train the MLA based on the training set which comprises each feature vector in the plurality of feature vectors and the respectively associated estimation errors in the set of estimation errors. The MLA may be trained by the server 100 in order to predict a given estimated error for a given feature vector inputted therein.

For example, during a first training iteration, the MLA may be inputted with the first feature vector 1100 and, consequently, may output a first assessment value. The MLA may also be inputted with the first estimation error 1402. The server 100 may be configured to adjust the MLA based on a difference between the first assessment value and the first estimation error in order to train the MLA to output a given assessment value for the given feature vector that is almost equal to the given estimated error. Generally speaking, after a large number of iterations, the MLA may be trained to output given assessment values that are equal or almost equal to given estimated errors of respectively associated given feature vectors.

In some embodiments of the present technology, after the MLA has been trained by the server 100, the server 100 may be configured to execute an in-use mode of the MLA for predicting the given estimation error for the given feature vector inputted therein. To that end, the server 100 may be configured to generate a plurality of trial feature vectors (not depicted) for the in-use mode of the MLA.

In this scenario, each trial feature vector in the plurality of trial feature vectors may have different combinations of values of the first target process feature and of the second target process feature. The server 100 may input each one of the trial feature vectors into the trained MLA in order to retrieve a respective trial estimation error. The server 100 may then input the respective values of the first target process feature and of the second target process feature of each one of the trial vectors into the planar regression function 1350 in order to retrieve a respective trial estimated outcome value. The server 100 may be configured to compute a respective trial corrected estimated outcome value based on a respective trial estimated outcome value and a respective trial estimation error for each trial feature vector. The server 100 may select a particular trial feature vector in the plurality of trial feature vectors as a current feature vector (not depicted) where a difference between a current outcome value (not depicted) and a respective corrected estimated outcome value is smaller than for any other trial feature vector in the plurality of trial feature vectors.

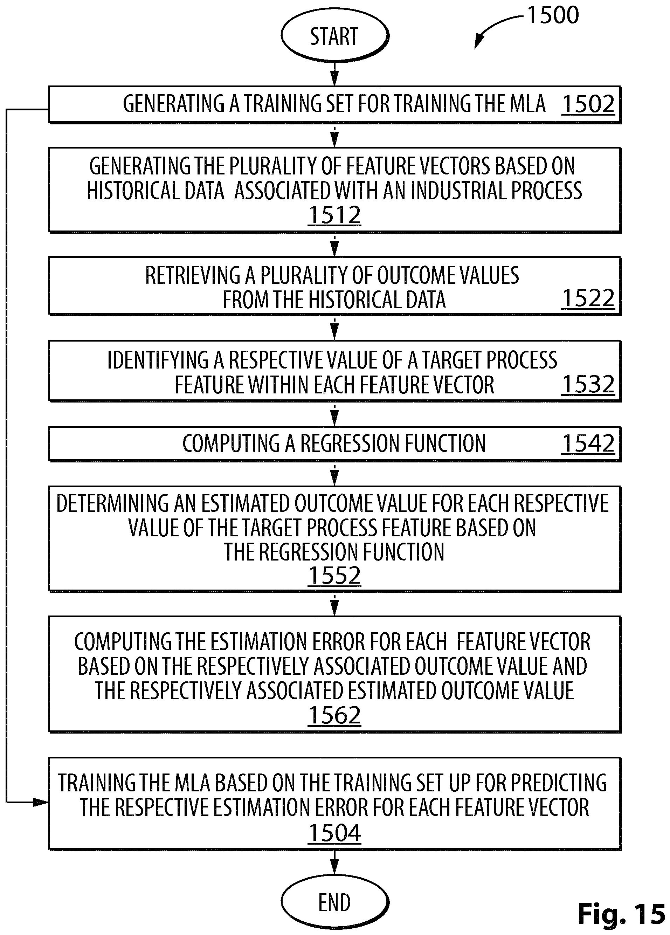

In some embodiments of the present technology, the server 100 may be configured to execute a method 1500 of training the MLA. The method 1500 will now be described in further detail with reference to Figure 15.

### STEP 1502: Generating a training set for training the MLA

The method 1500 begins at step 1502 with the server 100, which implements the MLA, generating the training set for training the MLA. The training set may comprise the plurality of feature vectors 402 and respectively associated estimation errors in the set of estimation errors.

In order to execute the step 1502 of the method 1500, the server 100 may execute sub steps 1512, 1522, 1532, 1542, 1552 and 1562.

During the sub step 1512, the server 100 may generate the plurality of feature vectors 402 based on history data associated with an industrial process. The history data may be in a form of the log table 200 depicted in Figure 2. The history data may be associated with one of various industrial processes that involve at least one of physical, chemical, electrical and mechanical steps in order to aid manufacturing of items and/or materials.

Each feature vector in the plurality of feature vectors 402 is representative of the plurality of identified process features 304 (depicted in Figure 3) of the industrial process in the history data.

During the sub step 1522, the server 100 may retrieve the plurality of outcome values 404 from the history data. Each outcome value in the plurality of outcome values 404 is representative of a respective past result of the industrial process and is respectively associated with each feature vector in the plurality of feature vectors 402.

In a case where the industrial process is the steel alloying process, a given past result of the industrial process may be the result of a given iteration of steel alloying process. The given past result may include an indication of the specific chemical composition of the steel alloy obtained via the first iteration of the steel alloying process. In one embodiment, the first outcome value 302 may be a percentage of manganese in the steel alloy obtained via the first iteration of the steel alloying process. In another embodiment, the first outcome value 302 may be a relative ratio of iron to carbon in the steel alloy obtained via the first iteration of the steel alloying process. In an additional embodiment, the first outcome value 302 may be a level of hardness of the steel alloy obtained via the first iteration of the steel alloying process. In other embodiments, the first outcome value 302 may be a measure of the tensile strength of the steel alloy obtained via the first iteration of the steel alloying process.

During the sub step 1532, the server 100 may identify a respective value of the target process feature in each feature vector in the plurality of feature vectors 402. The target process feature may be determined by the human operator 170.

In another embodiment of the present technology, the server 100 may identify a respective value of the first target process feature and a respective value of the second target process feature in each feature vector in the plurality of feature vectors 1102. To that end, the server 100 may be configured to identify the first target process feature and the second target process feature.

During the sub step 1542, the server 100 may compute the regression function 602 which is representative of the relationship between each value of the target process feature and the respective outcome value. In Figure 6, the regression function 602 is a linear regression function. However, in alternative embodiments of the present technology, the regression function 602 may be one of: a linear regression, a broken linear regression, a logistic regression, a polynomial regression, a ridge regression, a lasso regression and other known regressions.

In another embodiment of the present technology, the server 100 may compute the planar regression function 1350 which is representative of the relationship between each value of the first target process feature, a respective value of the second target process and a respective outcome value. In Figure 6, the plane regression function 1350 is a planar function since the plane regression function 1350 is representative of a relationship between one independent variable and two dependent variables. In some embodiments, the plane regression function 1350 may be a curved planar function.

During the sub step 1552, the server 100 may determine a given estimated outcome value for each respective value of the target process feature based on the regression function 602. For example, the server 100 may determine the set of estimated outcome values which comprises the first estimated outcome value 754, the second estimated outcome value 756, the third estimated outcome value 758, the fourth estimated outcome value 760, the fifth estimated outcome value 762, the sixth estimated outcome value 764, the seventh estimated outcome value 766, the eighth estimated outcome value 768, the ninth estimated outcome value 770 and the tenth estimated outcome value 772, such as depicted in Figure 7.

In another embodiment of the present technology, the server 100 may determine a given estimated outcome value for each respective pair of a given value of the first target process feature and a given value of the second target process feature based on the planar regression function 1350 depicted in Figure 13. For example, the server 100 may determine the set of estimated outcome values which comprises the first estimated outcome value 1452, the second estimated outcome value 1454 and the third estimated outcome value 1456, such as depicted in Figure 14.

During the sub step 1562 at which the step 1502 ends, the server 100 may compute a given estimation error for each feature vector in the plurality of feature vectors 402 based on the respectively associated outcome value and the respectively associated estimated outcome value. For example, the server 100 may compute the third estimation error 708 based on the third data point 608 and the third estimated outcome value 758. More specifically, the server 100 may be configured to compute the difference between the third outcome value 430 (one of the coordinates of the third data point 608) and the third estimated outcome value 758 such as depicted in Figure 7. In this case, the third estimation error 708 is negative since the regression function 602 overestimates the third outcome value 430 for the third value 410 of the target process feature by outputting a third estimated outcome value 758 which is superior to the third outcome value 430.

In another embodiment, for example, the server 100 may compute the first estimation error 1402 based on the first data point 1302 and the first estimated outcome value 1452. More specifically, the server 100 may be configured to compute the difference between the first outcome value 1126 (one of the coordinates of the first data point 1302) and the first estimated outcome value 1452. In this case, the first estimation error 1402 is positive since the regression function 602 underestimates the first outcome value 1302 for the first value 1106 of the first target process feature and for the first value 1112 of the second target process feature by outputting a first estimated outcome value 1452 which is inferior to the first outcome value 1126.

### STEP 1504: Training the MLA based on the training set

The method 1500 ends at step 1504 with the server 100 training the MLA based on the training set for predicting the respective estimation error for each feature vector. The training the MLA comprises inputting each feature vector and the respectively associated estimation error into the MLA.

In some embodiments, the server 100 may be configured to train the MLA based on the plurality of feature vectors 402 and the set of estimation errors. In other words, the server 100 may be configured to train the MLA based on the training set which comprises each feature vector in the plurality of feature vectors 402 and the respectively associated estimation errors in the set of estimation errors. The MLA may be trained by the server 100 in order to predict the given estimated error for a given feature vector inputted therein.

For example, during the first training iteration, the MLA may be inputted with the first feature vector 300 and, consequently, may output the first assessment value. The MLA is also be inputted with the first estimation error 704. The server 100 may be configured to adjust the MLA based on a difference between the first assessment value and the first estimation error in order to train the MLA to output a given assessment value for the given feature vector that is almost equal to the given estimated error. Generally speaking, after a large number of iterations, the MLA may be trained to output given assessment values that are equal or almost equal to given estimated errors of respectively associated given feature vectors.

In another embodiment, for example, during the first training iteration, the MLA may be inputted with the first feature vector 1100 and, consequently, may output the first assessment value. The MLA is also inputted with the first estimation error 1402. The server 100 may be configured to adjust the MLA based on a difference between the first assessment value and the first estimation error in order to train the MLA to output a given assessment value for the given feature vector that is almost equal to the given estimated error.

It should be expressly understood that not all technical effects mentioned herein need to be enjoyed in each and every embodiment of the present technology. For example, embodiments of the present technology may be implemented without the user enjoying some of these technical effects, while other embodiments may be implemented with the user enjoying other technical effects or none at all.

One skilled in the art will appreciate when the instant description refers to "receiving data" from a user that the electronic device executing receiving of the data from the user may receive an electronic (or other) signal from the user. One skilled in the art will further appreciate that displaying data to the user via a user-graphical interface (such as the screen of the electronic device and the like) may involve transmitting a signal to the user-graphical interface, the signal containing data, which data can be manipulated and at least a portion of the data can be displayed to the user using the user-graphical interface.

Some of these steps and signal sending-receiving are well known in the art and, as such, have been omitted in certain portions of this description for the sake of simplicity. The signals can be sent-received using optical means (such as a fibre-optic connection), electronic means (such as using wired or wireless connection), and mechanical means (such as pressure-based, temperature based or any other suitable physical parameter based).

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A method (1500) for training a Machine Learning Algorithm (MLA) for selecting process parameters for an industrial process, the method (1500) executable at a server (100), the server (100) implementing the MLA, the method (1500) comprising:
• generating (1502), by the server (100), a training set for training the MLA, the training set comprising a plurality of feature vectors (402) and respectively associated estimation errors, the generating (1502) the training set comprises:
∘ generating (1512), by the server (100), the plurality of feature vectors (402) based on history data associated with the industrial process, each feature vector being representative of a plurality of identified process features (304) of the industrial process within the history data;
∘ retrieving (1522), by the server (100), a plurality of outcome values (404) from the history data, each outcome value within the plurality of outcome values (404) being representative of a respective past result of the industrial process and being respectively associated with each feature vector within the plurality of feature vectors (402);
∘ identifying (1532), by the server (100), a respective value of a target process feature within each feature vector, the target process feature having been predetermined by an operator (170);
∘ computing (1542), by the server (100), a regression function (602) being representative of a relationship between each value of the target process feature and the respective outcome value;
∘ determining (1552), by the server (100), an estimated outcome value for each respective value of the target process feature based on the regression function (602); and
∘ computing (1562), by the server (100), the estimation error for each feature vector based on the respectively associated outcome value and the respectively associated estimated outcome value;
• training (1504), by the server (100), the MLA based on the training set for predicting the respective estimation error for each feature vector, the training (1504) the MLA comprises inputting, by the server (100), each feature vector and the respectively associated estimation error into the MLA.

2. The method (1500) of claim 1, wherein the method (1500) further comprises storing, by the server (100), the regression function (602) in a storage (120).

3. The method (1500) of any one of claims 1 and 2, wherein the method (1500) further comprises, after said training (1504):
• acquiring, by the server (100), the regression function (602) from the storage (120);
• acquiring, by the server (100), current values of a set of process features (850) and a current outcome value (840) being representative of a desired result of the industrial process, the set of process features (850) being representative of the plurality of identified process features (304) of the industrial process except the target process feature;
• determining, by the server (100), a first trial estimated outcome value (902) for a first trial value (820) of the target process feature based on the regression function (602);
• determining, by the server (100), a first trial estimation error (1002) from the trained MLA for the current values of the set of process features (850) and the first trial value (820) of the target process feature by inputting, by the server (100), the current values of the set of process features (850) and the first trial value (820) of the target process feature into the trained MLA;
• computing, by the server (100), a first trial corrected estimated outcome value (1006) based on the first trial estimated outcome value (902) and the first trial estimation error (1002);
• determining, by the server (100), a second trial estimated outcome value (904) for a second trial value (830) of the target process feature based on the regression function (602);
• determining, by the server (100), a second trial estimation error (1004) from the trained MLA for the current values of the set of process features (850) and the second trial value (830) of the target process feature by inputting, by the server (100), the current values of the current set of process features (850) and the second trial value (830) of the target process feature into the trained MLA;
• computing, by the server (100), a second trial corrected estimated outcome value (1008) based on the second trial estimated outcome value (904) and the second trial estimation error (1004); and
• selecting, by the server (100), a given one of the first trial value (820) of the target process feature and the second trial value (830) of the target process feature as the current value of the target process feature based on a difference between the current outcome value (840) and the first trial corrected estimated outcome value (1006) and a difference between the current outcome value and the second trial corrected estimated outcome value (1008).

4. The method (1500) of any of claims 1 to 3, wherein the method (1500) further comprises causing, by the server (100), execution of the industrial process with the current values of the set of process features (850) and the current value of the target process feature in order to acquire the current outcome value (840).

5. The method (1500) of any of claims 1 to 4, wherein the method (1500) further comprises determining, by the server (100), the first trial value (820) and the second trial value (830) based on the history data.

6. The method (1500) of any of claims 1 to 5, wherein the regression function (602) is one of: linear regression; a broken linear regression; a logistic regression; a polynomial regression; a ridge regression; and a lasso regression.

7. The method (1500) of claim 1, the method (1500) comprises:
∘ identifying, by the server (100), a respective value of a first target process feature and of a second target process feature within each feature vector, the first target process feature and the second target process feature having been predetermined by the operator (170);
∘ computing, by the server (100), a planar regression function (1350) being representative of a relationship between each value of the first target process feature, a respective value of the second target process feature and the respective outcome value;
∘ determining, by the server (100), an estimated outcome value for each respective value of the first target process feature and a respective value of the second target process feature based on the planar regression function (1350); and
∘ computing, by the server (100), the estimation error for each feature vector based on the respectively associated outcome value and the respectively associated estimated outcome value;
• training, by the server (100), the MLA based on the training set for predicting the respective estimation error for each feature vector, the training the MLA comprises inputting, by the server (100), each feature vector and the respectively associated estimation error into the MLA.

8. The method (1500) of claim 7, wherein the method (1500) further comprises, after said training:
• acquiring, by the server (100), the planar regression function (1350) from the storage (120);
• acquiring, by the server (100), current values of a set of process features and a current outcome value being representative of a desired result of the industrial process, the set of process features being representative of the plurality of identified process features of the industrial process except the first target process feature and the second target process future;
• determining, by the server (100), a first trial estimated outcome value for a first trial value of the first target process feature and for a first value of the second target process feature based on the planar regression function (1350);
• determining, by the server (100), a first trial estimation error from the trained MLA for the current values of the set of process features, the first trial value of the first target process feature and the first trial value of the second target process feature by inputting, by the server, the current values of the set of process features, the first trial value of the first target process feature and the first value of the second target process feature into the trained MLA;
• computing, by the server (100), a first trial corrected estimated outcome value based on the first trial estimated outcome value and the first trial estimation error;
• determining, by the server (100), a second trial estimated outcome value for a second trial value of the first target process feature and for a second trial value of the second target process feature based on the planar regression function (1350);
• determining, by the server (100), a second trial estimation error from the trained MLA for the current values of the set of process features, the second trial value of the first target process feature and the second trial value of the second target process feature by inputting, by the server, the current values of the current set of process features, the second trial value of the first target process feature and the second value of the second target process feature into the trained MLA;
• computing, by the server (100), a second trial corrected estimated outcome value based on the second trial estimated outcome value and the second trial estimation error; and
• selecting, by the server (100), the first trial values or the second trial values as the current pair of values for the first target process feature and the second target process feature, respectively, based on a difference between the current outcome value and the first trial corrected estimated outcome value and a difference between the current outcome value and the second trial corrected estimated outcome value.

9. The method (1500) of claim 7 or claim 8, wherein the method (1500) further comprises causing, by the server (100), execution of the industrial process with the current values of the set of process features and the current pair of values for the first target process feature and the second target process feature, respectively, in order to acquire the current outcome value.

10. The method (1500) of any of claims 7 to 9, wherein the method (1500) further comprises determining, by the server (100), the pair of the first trial values and the pair of the second trial values based on the history data.

11. The method (1500) of any of claims 1 to 10, wherein the industrial process is a steel alloying process.

12. A server (100) for training a Machine Learning Algorithm (MLA) for selecting process parameters for an industrial process, the server (100) implementing the MLA, the server (100) being configured to:
• generate a training set for training the MLA, the training set comprising a plurality of feature vectors (402) and respectively associated estimation errors, to generate the training set comprises the server being configured to:
o generate the plurality of feature vectors (402) based on history data associated with the industrial process, each feature vector being representative of a plurality of identified process features (304) of the industrial process within the history data;
∘ retrieve a plurality of outcome values (404) from the history data, each outcome value within the plurality of outcome values (404) being representative of a respective past result of the industrial process and being respectively associated with each feature vector within the plurality of feature vectors (402);
∘ identify a respective value of a target process feature within each feature vector, the target process feature having been predetermined by an operator (170);
∘ compute a regression function (602) being representative of a relationship between each value of the target process feature and the respective outcome value;
∘ determine an estimated outcome value for each respective value of the target process feature based on the regression function (602); and
∘ compute the estimation error for each feature vector based on the respectively associated outcome value and the respectively associated estimated outcome value;
• train the MLA based on the training set for predicting the respective estimation error for each feature vector, to train the MLA comprises the server being configured to input each feature vector and the respectively associated estimation error into the MLA.

13. The server (100) of claim 12, wherein the server (100) is further configured to store the regression function (602) in a storage (120).

14. The server (100) of claim 13, wherein the server (100) is further configured to, after the server is configured to train:
• acquire the regression function (602) from the storage (120);
• acquire current values of a set of process features (850) and a current outcome value (840) being representative of a desired result of the industrial process, the set of process features (850) being representative of the plurality of identified process features (304) of the industrial process except the target process feature;
• determine a first trial estimated outcome value (902) for a first trial value (820) of the target process feature based on the regression function (602);
• determine a first trial estimation error (1002) from the trained MLA for the current values of the set of process features (850) and the first trial value (820) of the target process feature by inputting the current values of the set of process features (850) and the first trial value (820) of the target process feature into the trained MLA;
• compute a first trial corrected estimated outcome value (1006) based on the first trial estimated outcome value (902) and the first trial estimation error (1002);
• determine a second trial estimated outcome value (904) for a second trial value (830) of the target process feature based on the regression function (602);
• determine a second trial estimation error (1004) from the trained MLA for the current values of the set of process features (850) and the second trial value (830) of the target process feature by inputting the current values of the current set of process features (850) and the second trial value (830) of the target process feature into the trained MLA;
• compute a second trial corrected estimated outcome value (1008) based on the second trial estimated outcome value (904) and the second trial estimation error (1004); and
• select a given one of the first trial value (820) of the target process feature and the second trial value (830) of the target process feature as the current value of the target process feature based on a difference between the current outcome value (840) and the first trial corrected estimated outcome value (1006) and a difference between the current outcome value (840) and the second trial corrected estimated outcome value (1008).

15. The server (100) of claim 12, the server (100) being configured to:
∘ identify a respective value of a first target process feature and of a second target process feature within each feature vector, the first target process feature and the second target process feature having been predetermined by the operator (170);
∘ compute a planar regression function (1350) being representative of a relationship between each value of the first target process feature, a respective value of the second target process feature and the respective outcome value;
∘ determine an estimated outcome value for each respective value of the first target process feature and a respective value of the second target process feature based on the planar regression function (1350); and
∘ compute the estimation error for each feature vector based on the respectively associated outcome value and the respectively associated estimated outcome value;
• train the MLA based on the training set for predicting the respective estimation error for each feature vector, to train the MLA comprises the server being configured to input each feature vector and the respectively associated estimation error into the MLA;
• acquire the planar regression function (1350) from the storage (120);
• acquire current values of a set of process features and a current outcome value being representative of a desired result of the industrial process, the set of process features being representative of the plurality of identified process features of the industrial process except the first target process feature and the second target process future;
• determine a first trial estimated outcome value for a first trial value of the first target process feature and for a first value of the second target process feature based on the planar regression function (1350);
• determine a first trial estimation error from the trained MLA for the current values of the set of process features, the first trial value of the first target process feature and the first trial value of the second target process feature by inputting the current values of the set of process features, the first trial value of the first target process feature and the first value of the second target process feature into the trained MLA;
• compute a first trial corrected estimated outcome value based on the first trial estimated outcome value and the first trial estimation error;
• determine a second trial estimated outcome value for a second trial value of the first target process feature and for a second trial value of the second target process feature based on the planar regression function (1350);
• determine a second trial estimation error from the trained MLA for the current values of the set of process features, the second trial value of the first target process feature and the second trial value of the second target process feature by inputting the current values of the current set of process features, the second trial value of the first target process feature and the second value of the second target process feature into the trained MLA;
• compute a second trial corrected estimated outcome value based on the second trial estimated outcome value and the second trial estimation error; and
• select the first trial values or the second trial values as the current pair of values for the first target process feature and the second target process feature, respectively, based on a difference between the current outcome value and the first trial corrected estimated outcome value and a difference between the current outcome value and the second trial corrected estimated outcome value.
